# EUROPEAN PATENT APPLICATION

(11) **EP 4 660 854 A1**
(43) Date of publication of application: **10.12.2025**
(21) Application number: 25180739.2
(22) Date of filing: 04.06.2025
(51) Int. Cl.: G06F 21/50, G06F 21/55, H04L 9/40

(54) **CYBER-ATTACK DETECTION IN A LOGGING SYSTEM**

(30) Priority: 07.06.2024 US 202418737129
(71) Applicant: Microsoft Technology Licensing, LLC, Redmond, WA 98052-6399 (US)
(72) Inventor: Venkatesan, Ramarathnam, Redmond, WA, 98052 (US); Jakubowski, Mariusz H., Bellevue, WA, 98007 (US); Gupta, Kartik, 394510 Surat, GJ (IN); Bose, Subhra, Ossining, NY, 10562 (US); Stirpe, Paul Alan, Shoreham, NY, 11786 (US)
(74) Representative: Grünecker Patent- und Rechtsanwälte PartG mbB

(57) **Abstract**

Systems, methods, and computer readable storage media described herein for detecting cyber-attacks in a logging system. For instance, operation information for an executing operation is received. A log of the executing operation is generated based on the operation information. During generation of the log, a triggering event is detected based on the executing operation. The triggering event corresponds to a potential cyber-attack. A protective action is performed to mitigate the potential cyber-attack. In a further aspect, the executing operation comprises a plurality of sub-operations. A sub-operation subset of the sub-operations is determined to satisfy a risk logging criterion. The determined sub-operation subset is included in the log without including a first sub-operation of the sub-operations that fails to satisfy the risk logging criterion. In another aspect, a watermark is inserted into a downloaded copy of data, the watermark detectable to determine an original source of exfiltrated data.

## Description

### BACKGROUND

Logging systems collect information with respect to activity in network computing systems. Such information includes queries executed during a network session, a user account of the accessing user, timestamp information, and data accessed. Some implementations of logging systems collect a broad range of information each session in order to facilitate analytics by multiple types of analytics systems.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Embodiments described herein detect potential cyber-attacks in logging systems. For example, a logging system in accordance with an embodiment receives operation information for an executing operation. The logging system generates a log of the executing operation based on the query information. During generation of the log, the logging system detects a triggering event based on the executing operation. The triggering event corresponds to a potential cyber-attack. The logging system performs a protective action to mitigate the potential cyber-attack.

In a further aspect, the protective action is a remedial action to remedy a security deficiency with respect to a database.

In a further aspect, the protective action is a preemptive action to mitigate an impact of the potential cyber-attack.

In a further aspect, the executing operation is an executing query.

In a further aspect, the logging system generates the log based on the operation information and other available information (e.g., regarding the system and execution environment).

In a further aspect, the executing operation comprises a plurality of sub-operations. The logging system determines a sub-operation subset of the sub-operations satisfies a risk logging criterion. The logging system includes the determined sub-operation subset in the log without including a first sub-operation of the sub-operations that fails to satisfy the risk logging criterion.

In another further aspect, the logging system inserts a watermark into a downloaded copy of data the executing operation is intending to download. The watermark is detectable (e.g., by a watermark detection system) to determine an original source of exfiltrated data.

In another further aspect, the logging system utilizes an embedding model to detect a triggering event.

### BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 shows a block diagram of an example system for executing operations and logging activity, in accordance with an example embodiment.
FIG. 2 shows a block diagram of a system for detecting a potential cyber-attack in a logging system, in accordance with an example embodiment.
FIG. 3 shows a flowchart of a process for performing a protective action in a logging system, in accordance with an example embodiment.
FIG. 4 shows a flowchart of a process for performing a protective action, in accordance with another example embodiment.
FIG. 5 shows a block diagram of a system for generating a log of an executing operation, in accordance with an example embodiment.
FIG. 6 shows a flowchart of a process for generating a log of an executing operation, in accordance with an example embodiment.
FIG. 7 shows a flowchart of a process for generating a log of an executing operation, in accordance with another example embodiment.
FIG. 8 shows a flowchart of a process for detecting a triggering event, in accordance with an example embodiment.
FIG. 9 shows a flowchart of a process for detecting a triggering event, in accordance with another example embodiment.
FIG. 10 shows a flowchart of a process for detecting a triggering event, in accordance with another example embodiment.
FIG. 11 shows a block diagram of a system for utilizing an embedding model, in accordance with an example embodiment.
FIG. 12 shows a flowchart of a process for utilizing an embedding model, in accordance with an example embodiment.
FIG. 13 shows a flowchart of a process for detecting a triggering event based on operation embeddings, in accordance with an example embodiment.
FIG. 14 shows a block diagram of a system for utilizing an embedding model, in accordance with another example embodiment.
FIG. 15 shows a flowchart of a process for utilizing an embedding model, in accordance with another example embodiment.
FIG. 16 shows a block diagram of a system for watermarking data, in accordance with an example embodiment.
FIG. 17 shows a flowchart of a process for watermarking data, in accordance with an example embodiment.
FIG. 18 shows a block diagram of a system for identifying and remediating watermarked data, in accordance with an example embodiment.
FIG. 19 shows a flowchart of a process for identifying and remediating watermarked data, in accordance with an example embodiment.
FIG. 20 shows a block diagram of a system for training a classifier to detect a potential attack, in accordance with an example embodiment.
FIG. 21 shows a flowchart of a process for training a classifier to detect a potential attack, in accordance with an example embodiment.
FIG. 22 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments of Detecting Cyber-Attacks in a Logging System

Logging systems collect information with respect to activity in network computing systems. Such information includes queries executed during a network session, other operations performed/executed during the network session, a user account of the accessing user, timestamp information, and data accessed. Some implementations of logging systems collect a broad range of information each session in order to facilitate analytics by multiple types of analytics systems. For instance, a broad-based logging system in an implementation generates logs without a preset purpose.

As stated above, some implementations of logging systems generate broad logs (e.g., logs without a specified purpose, general activity logs, etc.). In this context, an analytics system has to investigate the log based on its requirements and domain expertise. In some cases, this results in a delay in analyzing log data, as an analytics system analyzes logs after they are generated. Furthermore, the analytics system has to filter through the logs to identify information pertinent to the analytics system's functions. Logs can be lengthy and comprise lots of data related to a particular session, thus taking time for the analytics system to parse pertinent information.

Embodiments of the present disclosure provide a logging system for detecting potential cyber-attacks. For instance, a logging system in accordance with an embodiment receives operation information for an executing operation (e.g., an executing database operation, an executing query, an operation executing with respect to an application, and/or the like). The logging system generates a log of the executing operation. During generation of the log, the logging system is configured to detect a triggering event corresponding to a potential cyber-attack. Examples of cyber-attacks include, but are not limited to, data exfiltration cyber-attacks, ransomware cyber-attacks, and man-in-the-middle cyber-attacks. Examples of triggering events include, but are not limited to, determining a similarity between patterns of sub-operations of an operation and a pattern of a potential cyber-attack satisfies a triggering event criterion (e.g., a level of similarity between the patterns is equal to or above a predetermined percentage), determining a frequency of accesses to data satisfies a triggering event criterion (e.g., a frequency of access is above a predetermined number, a frequency of access is greater than a monthly (or yearly, or weekly, etc.) average for the user account (e.g., by a predetermined amount), determining an amount of time spent executing an operation satisfies a triggering event criterion (e.g., the amount of time is longer (or shorter) than a predetermined number, the amount of time is longer (or shorter) than an average length of time (e.g., by a predetermined amount or percentage), the amount of time is longer (or shorter) than an estimated amount of time (e.g., by a predetermined amount or percentage), etc.), determining a semantic similarity between an operation and a potential attack satisfies a triggering event criterion (e.g., the level of semantic similarity is at or above a predetermined threshold), detecting an abnormality in an operation request (e.g., a location of a computing device that transmitted the operation request is different from previous locations of computing devices associated with a user account, a timestamp of the operation request is different from normal operating hours of computing devices associated with a user account, the type of data the computing device is accessing is different from typical data accessed by the user account, and/or any other information indicative of abnormal activity with respect to a user account or computing device, as described elsewhere herein), and/or any other type of event that causes logging system to detect a potential cyber-attack, as described elsewhere herein. If a potential cyber-attack is detected, the logging system performs (or causes another component to perform) a protective action to mitigate the potential cyber-attack.

By detecting cyber-attacks during generation of logs, embodiments described herein are able to detection potential cyber-attacks during the attack, thereby increasing the speed and reducing the response time in performing protective actions to mitigate such attacks. In this context, the security of a comprised user's data is increased (e.g., by reducing exposure of sensitive data/assets). In some implementations, the cyber-attack is completely prevented. In other implementations, a protective action causes the cyber-attacker's access to a user account to cease, preventing any further exposure of sensitive data/assets associated with the account. In some implementations, the protective action is a remedial action that remedies a cyber-attack (e.g., by remediating a security deficiency with respect to an application, a database, or a computing device, by intercepting the cyber-attack, and/or the like). Examples of remedial actions include, but are not limited to, causing an operation (e.g., the executing operation) associated with the detected potential cyber-attack to be aborted, causing a user account session associated with the detected potential cyber-attack to be logged out and/or locked, rotating a private key or password associated with the user account, alerting a user associated with the user account, alerting an organization associated with accessed data, and/or any other action that may be performed in an attempt to remediate a security deficiency or otherwise remediate the potential cyber-attack. In some implementations, the protective action is a preemptive action that mitigates a potential impact of a potential cyber-attack. Examples of preemptive actions include, but are not limited to, watermarking data accessed by an operation, watermarking data accessed during a user account session, raising a security level of a security policy applied to data and//or an application, marking a user account as suspicious or potentially compromised, and/or any other action that may be performed in an attempt to mitigate a potential impact of a potential cyber-attack, as described elsewhere herein.

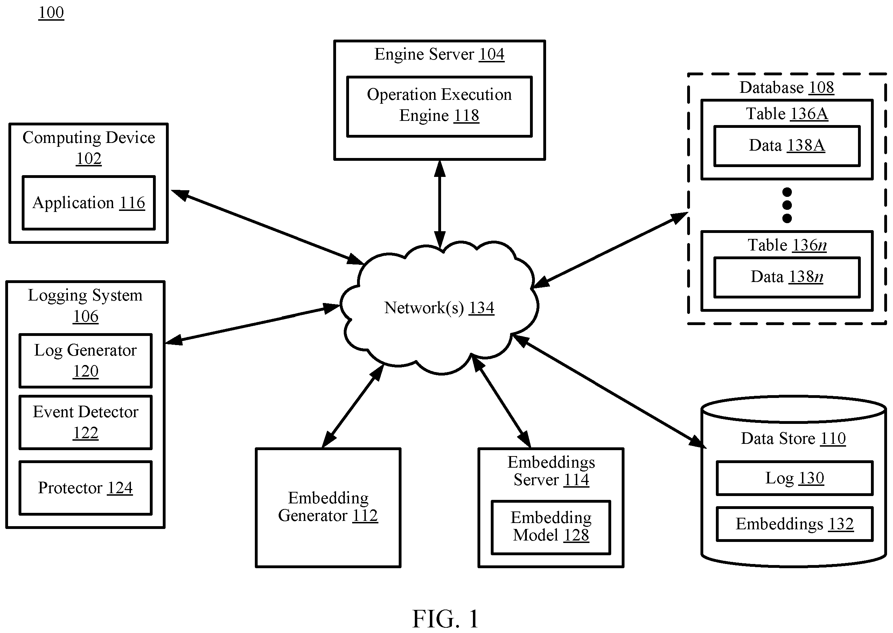

Embodiments of systems implementing cyber-attack detection in logging systems are configured in various ways. For instance, FIG. 1 shows a block diagram of an example system 100 for executing operations and logging activity, in accordance with an example embodiment. As shown in FIG. 1, system 100 comprises a computing device 102, an engine server 104, a logging system 106, a database 108, a data store 110, an embedding generator 112, and an embeddings server 114. Computing device 102, engine server 104, logging system 106, database 108, data store 110, embedding generator 112, and embeddings server 114 are communicatively coupled via a network 134. In examples, network 134 comprises one or more networks such as local area networks (LANs), wide area networks (WANs), enterprise networks, the Internet, etc. In examples, network 134 comprises one or more wired and/or wireless portions. The features of system 100 are described in detail as follows.

Database 108 is configured to store data. Examples of database 108 include, but are not limited to unstructured databases (e.g., binary large object (blob) storages), structured databases (e.g., SQL databases), and semi-structured database. In implementations, database 108 includes any amount of data organized in various ways. For instance, as shown in FIG. 1, database 108 comprises tables 136A-136n storing respective sets of data 138A-138n. Each table of tables 136A-136n comprise one or more columns in which respective data of data 138A-138n is organized. In accordance with an embodiment, tables of tables 136A-136n are grouped into "clusters" (not shown in FIG. 1 for brevity). In accordance with an embodiment, database 108 implemented as a cloud-based storage (e.g., cloud-based data lake storage, cloud-based file system, cloud-based database, etc.). In this context, database 108 is stored by one or more servers in a networked-server infrastructure (not shown in FIG. 1 for brevity).

Data store 110 is configured to store data utilized by and/or generated by computing device 102, engine server 104, logging system 106, embedding generator 112, embedding server 114, and/or components thereof and/or services executing thereon. For instance, as shown in FIG. 1, data store 110 stores logs 130 and embeddings 132. Logs 130 comprise information related to user sessions with database 108 and/or operations executed against database 108. Additional details regarding logs 130 are described elsewhere herein, and in particular with respect to engine server 104 and logging system 106. Embeddings 132 are information dense representations of semantic meaning of an input (e.g., a piece of text). Additional details regarding embeddings 132 are described elsewhere herein, and in particular with respect to embedding generator 112 and embedding server 114.

As shown in FIG. 1, data store 110 is external to computing device 102, engine server 104, logging system 106, database 108, embedding generator 112, and embedding server 114. In an altemative embodiment, some or all of data store 110 is internal to computing device 102, engine server 104, logging system 106, database 108, embedding generator 112, and/or embedding server 114. In accordance with an embodiment, data store 110 is a remote storage accessible over network 134 (e.g., a web storage, a blob storage, a networked file system, a cloud storage, etc.).

In examples, computing device 102 is any type of stationary or mobile processing device, including, but not limited to, a desktop computer, a server, a mobile or handheld device (e.g., a tablet, a personal data assistant (PDA), a smart phone, a laptop, etc.), an Internet-of-Things (IoT) device, etc. In accordance with an embodiment, computing device 102 is associated with a user (e.g., an individual user, a group of users, an organization, a family user, a customer user, an employee user, an admin user (e.g., a service team user, a developer user, a management user, etc.), etc.). Computing device 102 is configured to execute an application 116. In accordance with an embodiment, application 116 enables a user to interface with engine server 104, logging system 106, database 108, data store 110, embedding generator 112, and/or embedding server 114 (e.g., over network 134).

As shown in FIG. 1, engine server 104, logging system 106, embedding generator 112, and embedding server 114 are separate components of system 100. Alternatively, one or more of engine server 104, logging system 106, embedding generator 112, and/or embedding server 114 are implemented in the same device or sub-system of system 100. For instance, in accordance with an embodiment, engine server 104, logging system 106, embedding generator 112, and/or embedding server 114 are implemented as network-accessible servers (or other types of computing devices) incorporated in a network-accessible server set (e.g., a cloud-based environment, an enterprise network server set, and/or the like). In an alternative or additional embodiment, two or more of engine server 104, logging system 106, embedding generator 112, and/or embedding server 114 are implemented on the same computing device. In an embodiment, any of engine server 104, logging system 106, embedding generator 112, and/or embedding server 114 are implemented across multiple servers or computing devices (e.g., as a distributed system or a distributed service). Each of engine server 104, logging system 106, embedding generator 112, and/or embedding server 114 are configured to execute services and/or operations. For instance, as shown in FIG. 1, engine server 104 is configured to execute an operation execution engine 118, logging system 106 is configured to execute a log generator 120, an event detector 122, and a protector 124, embedding generator 112 is configured to execute operations for generating embeddings, and embeddings server 114 is configured to execute an embedding model 128. In accordance with an embodiment, application 116 interfaces with operation execution engine 118, log generator 120, event detector 122, protector 124, embedding generator 112, and/or embedding model 128 over network 134.

Operation execution engine 118 is configured to execute operations against database 108 to generate operation results. In some embodiments, operation execution engine 118 implements operation optimization techniques. As shown in FIG. 1, operation execution engine 118 is executed by engine server 104. Alternatively, operation execution engine 118 is implemented by an application executing on computing device 102 (e.g., application 116). In another altemative embodiment, operation execution engine 118 is implemented as a component of logging system 106.

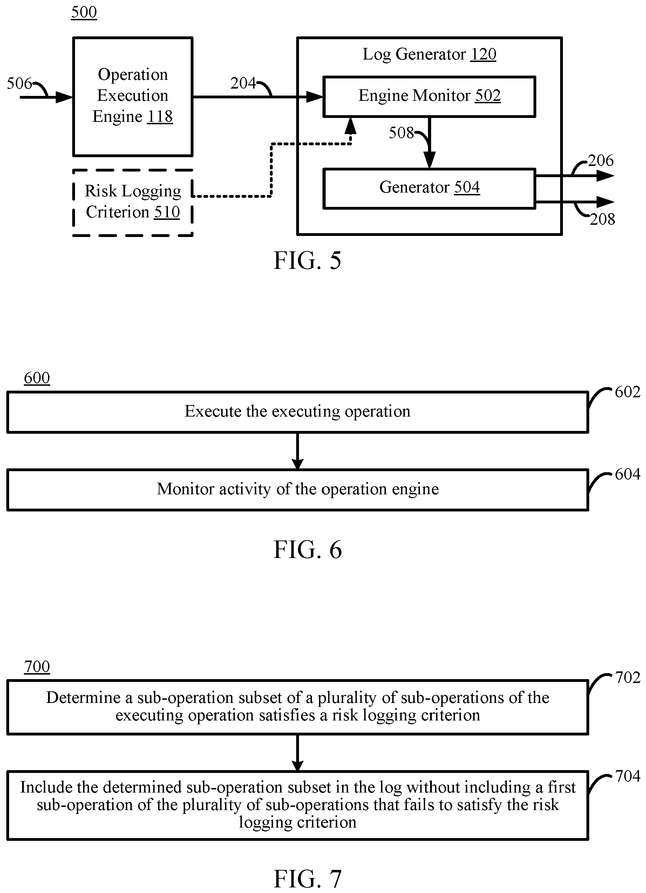

Log generator 120 is implemented as a sub-service/sub-component of logging system 106. In embodiments, log generator 120 is configured to generate logs of user account sessions and/or operation executions. For instance, in accordance with an embodiment, log generator 120 is configured to generate a log associated with a user account session of application 116 (e.g., generated corresponding to a time a user logs into a user account of application 116 and a time the user logs out of (or is logged out of, e.g., by a timeout function, an inactivity function, a sleep function, and/or the like) the user account, generated with respect to a period of time a user account of application 116 is in an "online" state, and/or the like). In accordance with another embodiment, log generator 120 is configured to generate a log associated with a period of time in which a user account is accessing database 108 and/or operation execution engine 118. In accordance with another embodiment, log generator 120 is configured to generate a log associated with an operation, a batch of operations, or a series of operations executed, executing, and/or to be executed by operation execution engine 118. In some embodiments, logs comprise information related to the user account the session and/or operation is associated with (e.g., the requesting user, an account identifier (ID) that uniquely identifies the user account, a computing device associated with the user account (e.g., computing device 102), and/or the like), application(s) utilized to access operation execution engine 118 and/or database 108 (e.g., application 116), operations submitted and/or executed during the session, operation requests made, timestamp information (e.g., the time an operation was submitted, the time a different action was performed, the time the user account session was established, etc.), permissions granted to the user account, data accessed during the user account session, data accessed by executed/executing operations, and/or any other information associated with an operation or user account session being logged by log generator 120. In embodiments, this information is referred to as "operation information" or "session information." In accordance with some embodiments, log generator 120 generates the log based on a subset of operation/session information. Additional details related to generating logs based on a subset of information are further described with respect to FIG. 7, as well as elsewhere herein. In some embodiments, and as shown in FIG. 1, log generator 120 stores generated logs as log 130 in data store 110.

Event detector 122 is implemented as a subservice and/or subcomponent of logging system 106. In embodiments, event detector 122 is configured to detect triggering events that are potentially indicative of cyber-attacks. In some embodiments described herein, event detector 122 detects triggering events during generation of logs by log generator 120. In this context, event detector 122 enables rapid identification of potential cyber-attacks, as the potential attack is detected during execution of operations and/or user account sessions associated with the cyber-attacks, thereby reducing exposure of sensitive information associated with and/or accessible to the user account. Depending on the implementation, event detector 122 analyzes operation/session information in parallel with log generator 120 and/or analyzes (e.g., portions of) logs as they are generated by log generator 120. In some embodiments, log generator 120 streams output to event detector 122. In an altemative embodiment, log generator 120 provides processed portions of a log to event detector 122, thereby allowing event detector 122 to analyze the portion in parallel to log generator 120 generating the next portion of the log. In some embodiments, event detector 122 is configured to detect certain types of cyber-attacks. In other embodiments, event detector 122 is configured to indicate the type of cyber-attack detected. Types of cyber-attacks include, but are not limited to, data exfiltration attacks (e.g., through a data breach or data leak, through a rogue employee action (e.g., a rogue employee downloading and leaking data and/or the like), and/or the like), ransomware attacks (e.g., through a login data breach), and man-in-the-middle attacks.

Protector 124 is implemented as a subservice and/or subcomponent of logging system 106. In embodiments, protector 124 is configured to perform a protective action with respect to a detected potential cyber-attack. Examples of protective actions (e.g., preemptive actions, remedial actions, and/or other protective actions) include, but are not limited to, causing an operation associated with the detected potential cyber-attack to be aborted, causing a user account session associated with the detected potential cyber-attack to be logged out and/or locked, rotating a private key or password associated with the user account, watermarking data accessed by an operation, watermarking data accessed during a user account session, alerting a user associated with the user account (e.g., by another device associated with the user (e.g., a mobile device, a secondary computer, etc.), by another application associated with the user (e.g., a back-up e-mail account), and/or the like), alerting an organization associated with accessed data, causing access to data to be limited, marking the user account as suspicious or potentially compromised (e.g., for tracking repeated activity that causes triggering events), and/or any other action that may be performed in an attempt to protect against a potential cyber-attack, remediate with respect to a potential cyber-attack, preemptively mitigate a potential cyber-attack, and/or the like, e.g., as described elsewhere herein.

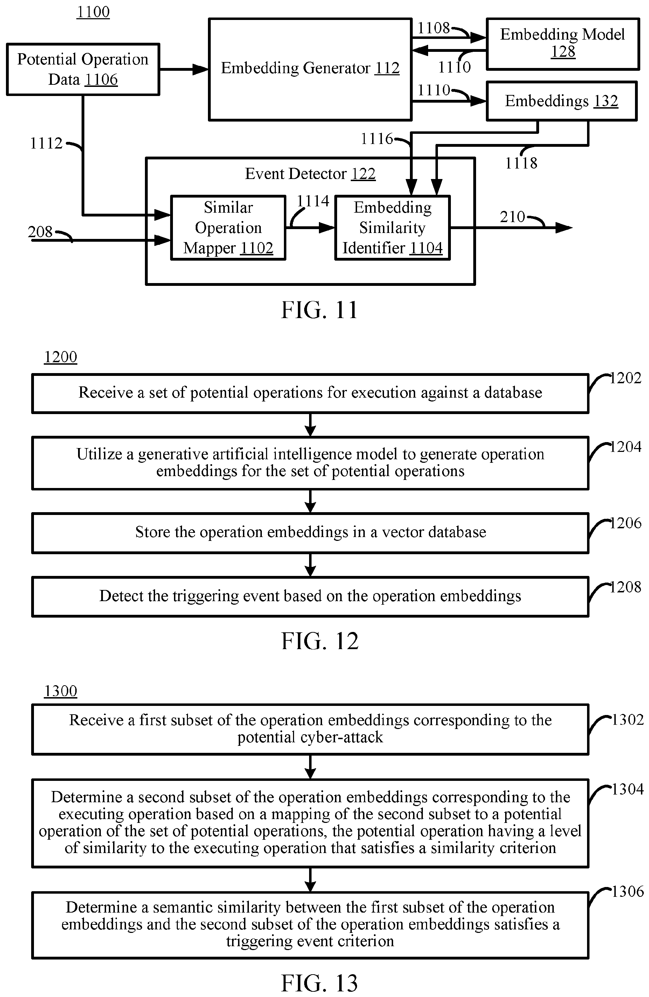

Embedding model 128 is a model configured to generate embeddings for use in event detection. The embeddings generated by embedding model 128 are information dense representations of semantic meaning of an input (e.g., a piece of text). For instance, in accordance with an embodiment, an embedding is a vector of floating-point numbers such that the distance between two embeddings in vector space is correlated with semantic similarity between two inputs in their original format (e.g., text format). As an example, if two texts are similar, their vector representations should also be similar. In this manner, embeddings generated by embedding model 128 provide representation of data usable by systems described herein for performing various functions associated with data represented by embeddings. For instance, event detector 122 in accordance with an embodiment utilizes embeddings to detect triggering events (e.g., as described with respect to FIGS. 11-15, as well as elsewhere herein).

Embedding generator 112 is configured to utilize embedding model 128 to generate embeddings. For instance, in accordance with an embodiment (and as further described with respect to FIGS. 11 and 12, as well as elsewhere herein), embedding generator 112 utilizes embedding model 128 to generate embeddings and store the embeddings as embeddings 132 in data store 110. As shown in FIG. 1, embedding generator 112 is a separate sub-system of system 100. Altematively, embedding generator 112 is implemented as a sub-component of logging system 106 or another component of system 100.

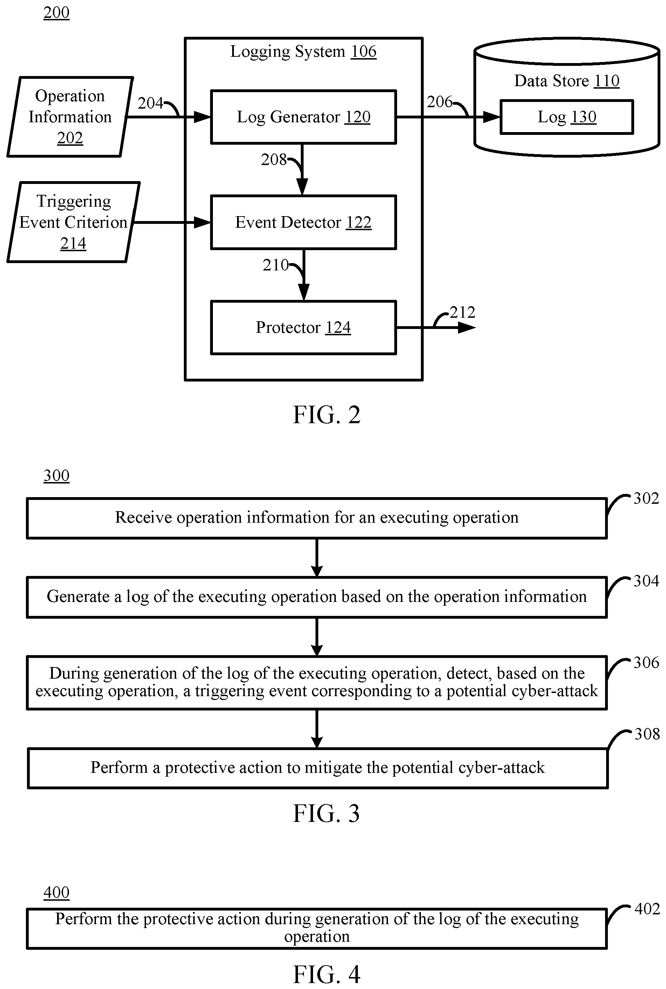

Embodiments of logging system 106 are configured in various ways to implement cyber-attack detection in logging systems. For example, FIG. 2 shows a block diagram of a system 200 for detecting a potential cyber-attack in a logging system, in accordance with an example embodiment. As shown in FIG. 2, system 200 comprises logging system 106 (comprising log generator 120, event detector 122, and protector 124) and data source 110 (storing log 130), as described with respect to FIG. 1, as well as operation information 202 and triggering event criterion 214. Operation information 202 comprises any information associated with an operation executing with respect to a database, queued to be executed with respect to a database, and/or the like. Triggering event criterion 214 specifies one or more criteria (e.g., thresholds, rules, etc.) that, when satisfied, indicates a triggering event has occurred. Examples of triggering event criterion 214 are described in greater detail elsewhere herein.

To better understand the operation of logging system 106, FIG. 2 is described with respect to FIG. 3. FIG. 3 shows a flowchart 300 of a process for performing a protective action in a logging system, in accordance with an example embodiment. In accordance with an embodiment, logging system 106 operates in accordance with one or more steps of flowchart 300. Note that not all steps of flowchart 300 need be performed in all embodiments. Further structural and operational embodiments will be apparent to persons skilled in the relevant art(s) based on the following descriptions of FIGS. 2 and 3.

Flowchart 300 begins with step 302. In step 302, operation information for an executing operation is received. For example, log generator 120 of FIG. 2 receives operation information 204 (e.g., comprising some or all of operation information 202). Depending on the implementation, log generator 120 receives operation information 204 from operation execution engine 118 (e.g., by monitoring operation execution engine 118 (e.g., as described with respect to FIGS. 5 and 6, as well as elsewhere herein), as an output of an operation of operation execution engine 118 (e.g., as a byproduct or a result of executing operations), and/or the like), application 116 (e.g., as an operation request directed to operation executing engine 118), and/or from a monitoring system of database 108 (not shown in FIG. 1 or 2 for brevity). In some embodiments, operation information 204 is pre-filtered. Alternatively, and as described with respect to FIG. 7, log generator 120 filters operation information 204.

In step 304, a log of the executing operation is generated based on the operation information. For example, log generator 120 of FIG. 2 generates a log 206 based on operation information 204. In embodiments, and as shown in FIG. 2, log generator 120 stores log 206 in data store 110 (e.g., as log 130, as an update to log 130, or as another log not shown in FIG. 2).

In step 306, during generation of the log of the executing operation, a triggering event corresponding to a potential cyber-attack is detected based on the executing operation. For example, event detector 122 of FIG. 2 receives logging signal 208 from log generator 120. In embodiments, logging signal 208 comprises information as it is logged by log generator 120, information being analyzed by log generator 120, and/or information queued to be analyzed by log generator 120. Event detector 122 analyzes logging signal 208 in order to detect (e.g., any) triggering events (e.g., in parallel to log 206 being generated). In implementations, event detector 122 analyzes the current log being generated, historic log data, attack data, pattern data, user account data, data associated with database 108 and/or other data related to a user account, database 108, and/or the like in order to detect triggering events. For instance, in accordance with an embodiment, event detector 122 is configured to detect activity of a session or operation that is indicative of a potential cyber-attack. If no triggering events are detected, event detector 122 does not interrupt the session and/or operation execution. If a triggering event is detected, event detector 122 transmits a detection signal 210 to protector 124 and flowchart 300 proceeds to step 308. In embodiments, detection signal 210 indicates the type of operation or activity that triggered the event, user account information (e.g., a session ID, an account ID, etc.), a timestamp associated with the session and/or operation, the type of attack the potential cyber-attack is, and/or the like.

In step 308, a protective action is performed to mitigate the protective cyber-attack. For example, protector 124 of FIG. 2 receives detection signal 210 and performs a protective action 212 to mitigate the potential cyber-attack detected in step 306. In some embodiments, protector 124 performs protective action 212 (e.g., directly). Alternatively, protector 124 causes another component of systems 100 or 200 to perform protective action 212. For instance, protector 124 in accordance with an embodiment causes an account management system associated with the user account (not shown in FIG. 1) to lock the user account, rotate keys, and/or terminate the user account session.

Embodiments of protector 124 are configured to perform protective actions in various ways. For example, some embodiments of protector 124 perform a protective action during generation of a log (e.g., log 130). For example, FIG. 4 shows a flowchart 400 of a process for performing a protective action, in accordance with another example embodiment. In accordance with an embodiment, protector 124 operates in accordance with one or more steps of flowchart 400. Note that flowchart 300 need not be performed in all embodiments. Further structural and operational embodiments will be apparent to persons skilled in the relevant art(s) based on the following description of FIG. 4 with respect to FIG. 2.

Flowchart 400 comprises step 402. In step 402, the protective action is performed during generation of the log of the executing operation. For example, protector 124 of FIG. 2 in accordance with an embodiment performs protective action 212 during generation of log 206. By performing protective action 212 during generation of log 206, such embodiments of protector 124 are able to terminate an operation or session, or otherwise remediate, mitigate, and/or prevent the potential cyber-attack. For instance, in accordance with an embodiment, protector 124 causes operation execution engine 118 to pause execution of the operation until the user account is verified (e.g., through multi-factor authentication or another technique for verifying the user, as described elsewhere herein). As another non-limiting example, suppose protector 124 detects and mitigates the potential cyber-attack during the attack's occurrence, thereby reducing the time a malicious entity (e.g., a hacker) has access to data and/or other sensitive information accessible to the account.

### III. Example Embodiments for Generating Logs

As described herein, log generator 120 generates a log related to a current session a user account has with a network system. For instance, log generator 120 in accordance with an embodiment generates a log corresponding to a user account session with database 108 and/or operation execution engine 118. Log generator 120 is configured in various ways to generate logs. For instance, FIG. 5 shows a block diagram of a system 500 for generating a log of an executing operation, in accordance with an example embodiment. As shown in FIG. 5, system 500 comprises operation execution engine 118 and log generator 120, as described with respect to FIG. 1, as well as (e.g., optionally) risk logging criterion 510. Risk logging criterion 510 specifies one or more criteria (e.g., thresholds, rules, etc.) that are utilized to filter operation information 204, as described elsewhere herein. Additional details regarding risk logging criterion 510 are described with respect to FIG. 7, as well as elsewhere herein. As also shown in FIG. 5, log generator 120 comprises an engine monitor 502 and a generator 504, each of which are implemented as sub-services and/or sub-components of log generator 120, in an embodiment. In order to better understand the operation of system 500, FIG. 5 is described with respect to FIG. 6. FIG. 6 shows a flowchart 600 of a process for generating a log of an executing operation, in accordance with an example embodiment. In accordance with an embodiment, system 500 operates in accordance with one or more steps of flowchart 600. Note that not all steps of flowchart 600 need be performed in all embodiments. Further structural and operational embodiments will be apparent to persons skilled in the relevant art(s) based on the following descriptions of FIGS. 5 and 6.

Flowchart 600 starts with step 602. In step 602, the executing operation is executed. For example, operation execution engine 118 of FIG. 5 receives a request 506 and executes an operation, resulting in operation information 204. In embodiments, request 506 is a request to execute one or more operations. Operation execution engine 118, in implementations, is configured to execute one operation at a time, queue a sequence of operations, execute multiple operations in parallel, and/or the like. In accordance with an embodiment, operation execution engine 18 receives request 506 from application 116. In accordance with an embodiment, request 506 specifies data of database 108 to manipulate or to access in performance of an operation.

In step 604, activity of the operation engine is monitored. For example, engine monitor 502 of FIG. 5 monitors activity of operation engine 118 via operation information 204. In accordance with an embodiment, engine monitor 502 transmits a request (not shown in FIG. 5) to operation execution engine 118 for operation information 204. In an altemative embodiment, operation execution engine 118 streams operation information 204 to engine monitor 502 (e.g., whenever an operation is queued by operation execution engine 118, executed by operation execution engine 118, and/or is being executed by operation execution engine 118). As shown in FIG. 5, engine monitor 502 generates a detected information signal 508 and transmits it to generator 504. Detected information signal 508 comprises operation information 204 received by engine monitor 502. In some embodiments, detected information signal 508 comprises a subset of operation information 204. For instance, as described further with respect to FIG. 7, detected information signal 508 in accordance with an embodiment comprises a subset of operation information 204 that satisfies risk logging criterion 510 (e.g., a likelihood of the subset corresponding to a potential cyber-attack is above a threshold). As shown in FIG. 5, generator 504 receives detected information signal 508 and generates log 206 based on detected information signal 508. As also shown in FIG. 5, generator 504 generates logging signal 208 based on detected information signal 508, as a byproduct or result of generating log 206, and/or the like (e.g., as described with respect to FIG. 2, as well as elsewhere herein).

Several example embodiments of log generator 120 receiving operation information have been described with respect to FIGS. 5 and 6. In some embodiments, log generator 120 generates logs (e.g., log 130) based on a subset of operation information. Such embodiments of log 120 operate in various ways. For instance, FIG. 7 shows a flowchart 700 of a process for generating a log of an executing operation, in accordance with another example embodiment. In accordance with an embodiment, logging system 106 of FIG. 1 or FIG. 5 operates in accordance with one or more steps of flowchart 700. Note that not all steps of flowchart 700 need be performed in all embodiments. Further structural and operational embodiments will be apparent to persons skilled in the relevant art(s) based on the following description of FIG. 7 with respect to FIG. 5.

Flowchart 700 begins with step 702. In step 702, a sub-operation subset of a plurality of sub-operations of the executing operation is determined to satisfy a risk logging criterion. For example, suppose operation information 204 comprises a plurality of sub-operations of an executing operation (e.g., subqueries of an executing query). In this context, engine monitor 502 of FIG. 5 in accordance with an embodiment determines a sub-operation subset of the plurality of sub-operations satisfy a risk logging criterion 510. Examples of risk logging criterion 510 include, but are not limited to, an operation type of the sub-operation, a type of database accessed (or to be accessed) by a sub-operation, an account a sub-operation originated from, and/or any other information log generator 120 (or a component thereof, e.g., engine monitor 502 of FIG. 5) can utilize to filter sub-operations of the plurality of sub-operations by in order to determine the sub-operation subset. In some embodiments, risk logging criterion 510 represents a subset of rules or criteria that engine monitor 502 can (e.g., easily) filter operation information 204 for "leaner" log generation (i.e., generation of logs that have information relevant or potentially relevant to cyber-attack detection (e.g., and not some or all of the information irrelevant to cyber-attack detection)). In accordance with an embodiment, engine monitor 502 generates detected information signal 508 comprising the sub-operation subset.

In step 704, the determined sub-operation subset is included in the log without including a first sub-operation of the plurality of sub-operations that fails to satisfy the risk logging criterion. For example, generator 504 of FIG. 5 generates log 206 by including the sub-operation subset of detected information signal 508 without including one or more sub-operations filtered out by engine monitor 502 (e.g., sub-operations that fail to satisfy risk logging criterion 510). By generating log 206 (and logging information of logging signal 208) based on a subset of sub-operations, such embodiments of engine monitor 502 reduce the amount of information event detector 122 considers in detecting events. Furthermore, in embodiments where log 206 is stored in a data store (e.g., data store 110 of FIG. 1), reducing the size of log 206 (by including a subset of the sub-operations of operation information 204) reduces the storage space utilized by log 206 (e.g., in comparison to a log that comprises the entirety of operation information 204 or that comprises the sub-operation subset and the sub-operations that fail to satisfy the risk logging criterion). In some embodiments, stored logs are utilized for further triage operations (e.g., deeper analysis regarding a potential cyber-attack after a protective action is performed, use of data corresponding to the potential cyber-attack for identification of other (e.g., later performed) potential cyber-attacks, and/or the like). In this context, reducing the information included in the log improves triage operations by reducing the amount of information the systems performing triage operations have to consider or otherwise filter through.

Examples of flowchart 700 have been described with respect to system 500 of FIG. 5, however, embodiments described herein are not so limited. For instance, in accordance with an embodiment, log generator 120 filters sub-operations and generates logs based on sub-operation subsets based on operation information received in other techniques than those described with respect to FIGS. 5 and 6. Furthermore, while embodiments of flowchart 700 are described as determining sub-operation subsets based on operation information, some embodiments of log generator 120 filter session information to determine sub-operation subsets based on the session information or other subsets of session information that satisfy risk logging criterion.

### IV. Example Embodiments of Triggering Event Detection

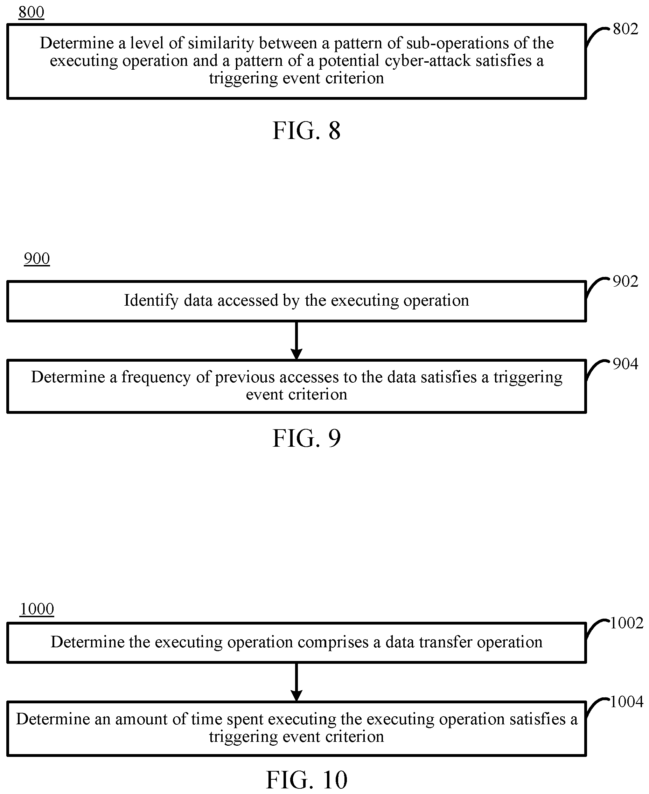

Embodiments of event detector 122 are configured to detect triggering events based on logs generated by log generator 120, information to be analyzed by log generator 120, and/or information being analyzed by log generator 120. Such embodiments of event detector 122 operate in various ways to detect triggering events. For instance, some embodiments of event detector 122 operate to detect triggering event based on similarities to cyber-attacks. As an example, FIG. 8 shows a flowchart 800 of a process for detecting a triggering event, in accordance with an example embodiment. In accordance with an embodiment, event detector 122 of FIG. 2 operates in accordance with flowchart 800. Note that flowchart 800 need not be performed in all embodiments. Further structural and operational embodiments will be apparent to persons skilled in the relevant art(s) based on the following description of FIG. 8 with respect to FIG. 2.

Flowchart 800 comprises step 802. In step 802, a level of similarity between a pattern of sub-operations of the executing operation and a pattern of a potential cyber-attack is determined to satisfy a triggering event criterion. For example, suppose logging information of logging signal 208 of FIG. 2 comprises a sequence of sub-operations of the executing operation. In this context, further suppose event detector 122 determines a level of similarity between a pattern of the sequence of sub-operations and a pattern of a potential cyber-attack is determined to satisfy triggering event criterion 214. In embodiments, the pattern of the potential cyber-attack represents a sequence of sub-operations related to cyber-attacks. Depending on the implementation, the sequence comprises sub-operations a developer of event detector 122 expects to be executed during a cyber-attack, sub-operations performed in previous cyber-attacks (e.g., derived from or stored as historical cyber-attack data), and/or the like. In accordance with an embodiment, event detector 122 determines a level of similarity between the sequence of sub-operations of logging information of logging signal 208 and a sequence of sub-operations of a potential attack by comparing the types of sub-operations in the sequencies, the order of the sub-operations in the sequences, data (or type thereof) accessed by the sub-operations of the sequences, and/or any other traits between the sequences that indicates a possible similarity between the sequences. In embodiments, the level of similarity represents a likelihood of the sequence of sub-operations of logging information of logging signal 208 is a potential cyber-attack. Event detector 122, in some embodiments, determines the level of similarity between the sequence and multiple patterns of potential cyber-attacks. In an implementation, the level of similarity is represented as a percentage. If event detector 122 determines the level of similarity satisfies a triggering event criterion (e.g., the level of similarity is above a threshold, a degree of dissimilarity is below a threshold, a number of matching sub-operations is above a threshold, and/or the like), event detector 122 generates detection signal 210 (e.g., in a similar manner as described with respect to step 306 of flowchart 300 of FIG. 3).

As described herein, embodiments of event detector 122 detect triggering events in various ways. For instance, some embodiments of event detector 122 detect triggering events based on frequencies of data accesses. As an example, FIG. 9 shows a flowchart 900 of a process for detecting a triggering event, in accordance with another example embodiment. In accordance with an embodiment, event detector 122 of FIG. 2 operates in accordance with one or more steps of flowchart 900. Note that not all steps of flowchart 900 need be performed in all embodiments. Further structural and operational embodiments will be apparent to persons skilled in the relevant art(s) based on the following description of FIG. 9 with respect to FIG. 2.

Flowchart 900 begins with step 902. In step 902, data accessed by the executing operation is identified. For example, in accordance with an embodiment, event detector 122 of FIG. 2 identifies data accessed by the executing operation (e.g., based on logging signal 208). In embodiments, event detector 122 identifies data accessed based on a table referenced in the operation (or a sub-operation) (e.g., table 136A, table 136n, etc.), data referenced in the operation (or a sub-operation) (e.g., data 138A, data 138n, etc.), a database the operation (or sub-operation) is executed against (e.g., database 108), a permission of the account requesting the operation, and/or any other information of logging signal 208 that indicates a data or type of data accessed by the executing operation (or a sub-operation). In accordance with an embodiment, event detector 122 identifies the data accessed by the executing operation subject to a particular access policy (e.g., a policy that specifies permissions required to access the data).

In step 904, a frequency of previous accesses to the data is determined to satisfy a triggering event criterion. For example, event detector 122 of FIG. 2 determines a frequency of previous accesses to the data identified in step 902 satisfies triggering event criterion 214 and generates detection signal 210 indicating (or indicative of) the determination. In accordance with an embodiment, event detector 122 accesses an access log that records previous accesses to the data. In a further embodiment, the access log specifies the user account, computing device, and/or application utilized to access the data. In an implementation, event detector 122 determines the frequency of previous accesses to the data based on a number of times the data was accessed (e.g., in general or by the particular account/device/application) in a particular period of time (e.g., the last week, the last month, the last (e.g., rolling) number of days (e.g., the last 30 days), the last year, etc.). For instance, if a user account typically accesses the identified data a few times a week (e.g., once or twice), an increase in access (e.g., hourly, daily, etc.) is potentially anomalous. In some embodiments, event detector 122 determines the frequency of previous accesses occurring at a similar time (or window of time) of day as the executing operation. For instance, if a user account typically accesses the identified data during business hours, an access outside of business hours is potentially anomalous. In some embodiments, event detector 122 determines the frequency of previous accesses occur at the same time of year, month, or week. For instance, suppose a user account typically accesses the identified data within a particular window of a fiscal quarter, a fiscal year, a workweek (e.g., data accessed at the beginning or end of the week), a month (e.g., end of the month). In this example, event detector 122 determines an access outside of this window is potentially anomalous. In any of these examples, event detector 122 determines if the potentially anomalous accesses satisfy triggering event criterion 214 (e.g., the frequency is above a threshold, the number of accesses is above a threshold, and/or the like). If so, event detector 122 generates detection signal 210 as described elsewhere herein.

As described herein, embodiments of event detector 122 detect triggering events in various ways. For instance, some embodiments of event detector 122 detect triggering events based on an amount of time spent executing an operation. As an example, FIG. 10 shows a flowchart 1000 of a process for detecting a triggering event, in accordance with another example embodiment. In accordance with an embodiment, event detector 122 of FIG. 2 operates in accordance with one or more steps of flowchart 1000. Note that not all steps of flowchart 1000 need be performed in all embodiments. Further structural and operational embodiments will be apparent to persons skilled in the relevant art(s) based on the following description of FIG. 10 with respect to FIG. 2.

Flowchart 1000 begins with step 1002. In step 1002, the executing operation is determined to comprise a data transfer operation. For example, event detector 122 of FIG. 2 determines (e.g., based on logging signal 208) that the executing operation comprises a data transfer operation. Examples of data transfer operations include, but are not limited to, an operation to transfer and/or copy data of data 138A-138*n* to computing device 102, to a remote storage (e.g., accessible to computing device 102), to another database, and/or the like. In some embodiments, event detector 122 detects which data is being transferred. Alternatively, event detector 122 determines any type of data transfer operation is included in the executing operation.

In step 1004, an amount of time spent executing the operation is determined to satisfy a triggering event criterion. For example, event detector 122 of FIG. 2 determines an amount of time spent executing data transfer operations of the operation satisfies triggering event criterion 214. In embodiments, triggering event criterion 214 specifies a direct amount of time (e.g., a number of seconds, a number of minutes, a number of hours) to be satisfied, a number of processing cycles to be satisfied, or a number of data transfer-related operations to be satisfied. In accordance with an embodiment, such triggering event criterion 214 is specific to the user account and/or the data being accessed. Alternatively, such triggering event criterion 214 is a (e.g., general) predetermined criterion. If triggering event criterion 214 is satisfied, event detector 122 generates detection signal 210 indicating a triggering event is detected.

As described herein, embodiments of event detector 122 detect triggering events in various ways. For instance, some embodiments of event detector 122 detect triggering events utilizing an embedding model. Such embodiments of event detector 122 are configured in various ways to utilize an embedding model in triggering event detection. For example, FIG. 11 shows a block diagram of a system 1100 for utilizing an embedding model, in accordance with an example embodiment. As shown in FIG. 11, system 1100 comprises embedding generator 112, event detector 122, embedding model 128, and embeddings 132, as described with respect to FIG. 1, as well as potential operation data 1106. Potential operation data 1106 comprises data corresponding to operations system 1100 expects to be executed with respect to a database (e.g., database 108 of FIG. 1). In accordance with an embodiment, potential operation data 1106 comprises data corresponding to previously executed operations (e.g., with personally identifying information (PII) removed) (e.g., previously executed operations, previously executed database operations, and/or the like). In an additional or altemative embodiment, potential operation data 1106 comprises a manually generated operation a developer of system 1100 expects a user to potentially execute with respect to the database (e.g., an expected database operation, a query to be executed with respect to the database, and/or the like). As also shown in FIG. 11, event detector 122 comprises a similar operation mapper 1102 and an embedding similarity identifier 1104, each of which are implemented as a sub-service and/or sub-component of event detector 122, in embodiments.

In order to better understand the operation of system 1100, FIG. 11 is described with respect to FIGS. 12 and 13. For instance, FIG. 12 shows a flowchart 1200 of a process for utilizing an embedding model, in accordance with an example embodiment. In accordance with an embodiment, system 1100 operates in accordance with one or more steps of flowchart 1200. Note that not all steps of flowchart 1200 need be performed in all embodiments. Further structural and operational embodiments will be apparent to persons skilled in the relevant art(s) based on the following descriptions of FIGS. 11 and 12.

Flowchart 1200 begins with step 1202. In step 1202, a set of potential operations for execution against a database are received. For example, embedding generator 112 of FIG. 11 receives potential operation data 1106. Potential operation data 1106 in this context comprises a set of potential operations for execution against database 108. In accordance with an embodiment, and as described elsewhere herein, the set of potential operations represent some or all of possible types of operations to be executed against database 108. In some embodiments, the set of potential operations are data-agnostic.

In step 1204, a generative artificial intelligence (AI) (GAI) model is utilized to generate operation embeddings for the set of potential operations. For example, embedding generator 112 of FIG. 11 utilizes embedding model 128 to generate operation embeddings 1110 for the set of potential operations of potential operation data 1106. As shown in FIG. 11, embedding generator 112 generates a prompt 1108 comprising instructions to cause embedding model 128 to generate operation embeddings 1110. In embodiments, the prompt 1108 comprises the set of operations, comprises a location of where the set of operations is stored (e.g., where potential operation data 1106 is stored), a type of embeddings to generate, a format of the embeddings to be generated, and/or any other information usable by embedding model 128 to generate embeddings 1110. In accordance with an embodiment, embedding generator 112 provides a single prompt 1108 to cause embedding model 128 to generate embeddings 1110 for the set of potential operations. Altematively, embedding generator 112 provides multiple prompts to cause embedding model 128 to generate embeddings 1110 (e.g., a separate prompt for each of the potential operations, a prompt for a subset of the potential operations, and/or the like). Furthermore, in some embodiments, embedding generator 112 receives embeddings 1110 as a single batch of embeddings (e.g., a single output of embedding model 128). Altematively, embedding generator 112 receives multiple sets of output from embedding model 128 (e.g., a separate output for embeddings of each potential operation, a separate output for each prompt provided to embedding model 128, and/or the like). In embodiments, embeddings 1110 are information dense representations of semantic meaning of the set of potential operations.

In step 1206, the operation embeddings are stored in a vector database. For example, embedding generator 112 of FIG. 11 stores embeddings 1110 as embeddings 132 (e.g., in data store 110 of FIG. 1, not shown in FIG. 11 for brevity). In this context, data store 110 (or a portion thereof) comprises a vector database for storing embeddings.

In step 1208, the triggering event is detected based on the operation embeddings. For example, event detector 122 of FIG. 11 detects a triggering event based on operation embeddings 1110. As shown in FIG. 11, event detector 122 generates detection signal representative of the triggering event detected based on operation embeddings 1110. Embodiments of event detector 122 of FIG. 11 operate to detect triggering events based on embeddings 132 in various ways, in embodiments. To better understand the operation of event detector 122 detecting triggering events based on operation embeddings 1110, step 1208 is described with respect to FIG. 13. FIG. 13 shows a flowchart 1300 of a process for detecting a triggering event based on operation embeddings, in accordance with an example embodiment. In accordance with an embodiment, event detector 122 of FIG. 11 operates in accordance with one or more steps of flowchart 1300. Flowchart 1300 is a further example of step 1208 of flowchart 1200, in an embodiment. Note that not all steps of flowchart 1300 need be performed in all embodiments. Further structural and operational embodiments will be apparent to persons skilled in the relevant art(s) based on the following descriptions of FIGS. 11, 12, and 13.

Flowchart 1300 begins with step 1302. In step 1302, a first subset of the operation embeddings corresponding to the potential cyber-attack is received. For example, embedding similarity identifier 1104 receives a first subset 1116 of operation embeddings 132. First subset 1116 corresponds to potential cyber-attacks. For instance, in an embodiment, embeddings of embeddings 132 that correspond to potential cyber-attacks are marked in the vector database. In this context, embedding similarity identifier 1104 retrieves first subset 1116 from embeddings 132 based on the marking.

In step 1304, a second subset of the operation embeddings corresponding to the executing operation are determined based on a mapping of the second subset to a potential operation of the set of potential operations, the potential operation having a level of similarity to the executing operation that satisfies a similarity criterion. For example, similar operation mapper 1102 of FIG. 11 receives logging signal 208 associated with the executing operation and determines a level of similarity between the executing operation (or a sub-operation thereof) and a potential operation 1112. In embodiments, similar operation mapper 1102 determines the level of similarity based on a text analysis of the executing operation and potential operation 1112, a type of the executing operation and potential operation 1112, data accessed by potential operation 112 and executing operation, and/or the like. If the level of similarity satisfies a similarity criterion (e.g., the level is above a threshold), and as shown in FIG. 11, similar operation mapper 1102 maps potential operation 1112 to the executing operation and provides a mapping 1114 to embedding similarity identifier 1104. In accordance with an embodiment, embedding similarity identifier 1104, responsive to receiving mapping 1114, obtains a second subset 1118 of embeddings 132, wherein second subset 1118 corresponds to the mapped potential operation 1112. In this context, embedding similarity identifier 1104 determines that second subset 1118 also corresponds to (or potentially corresponds to) the executing operation.

In step 1306, a semantic similarity between the first subset of the operation embeddings and the second subset of the operation embeddings is determined to satisfy a triggering event criterion. For example, embedding similarity identifier 1104 determines a semantic similarity between subset 1116 and 1118 satisfies a triggering event criterion (e.g., triggering event criterion 214 of FIG. 2). As shown in FIG. 11, embedding similarity identifier 1104 generates detection signal 210 indicating the semantic similarity satisfies triggering event criterion.

By determining operation embeddings corresponding to an executing operation based on mappings of potential operations to previously generated embeddings, embodiments of event detector 122 of FIG. 11 are able to determine a likelihood that an executing operation corresponds to a potential cyber-attack without placing a call to embedding model 128 during operation execution. This allows event detector 122 to quickly identify a potential cyber-attack as it occurs (or shortly after), as placing calls to embedding model 128 and waiting to receiving embeddings takes time. Furthermore, in some embodiments, each time a call is placed to embedding model 128, compute resources are expended to generate embeddings based on the call. By utilizing pre-generated embeddings and mapping a new operation to them (e.g., in a manner described with respect to step 1304), embodiments of event detector 122 of FIG. 11 reduce the overall number of calls placed to embedding model 128, as operations that are similar to an operation of potential operation data 1106 do not need to have new embeddings generated.

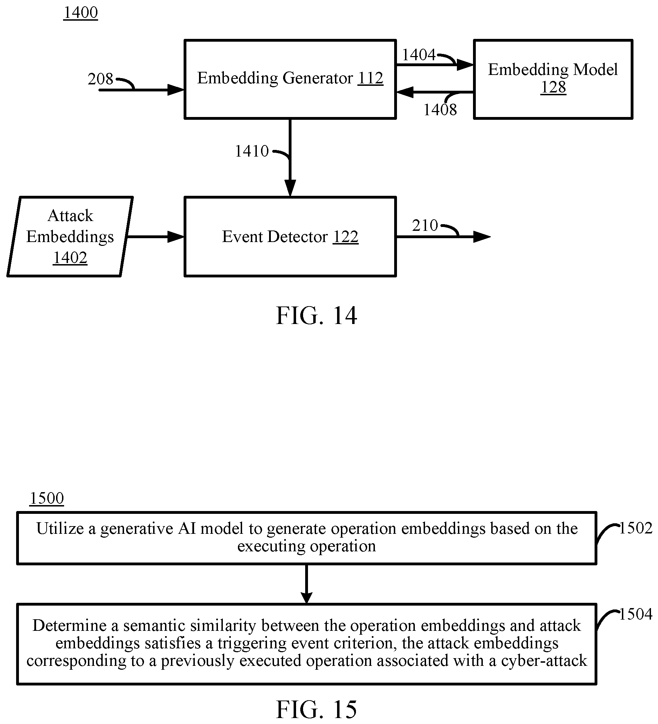

Several example embodiments of systems utilizing an embedding model (e.g., embedding model 128) to detect triggering events have been described with respect to FIGS. 11-13. Such embodiments may also be referred to as "off-line" embodiments, as calls to embedding model 128 to generate embeddings are placed separately from when the embeddings are utilized by event detector 122 to detect an event. In some embodiments, a system utilizes embedding model 128 in an "online" implementation. In this context, the system places a call to embedding model 128 to generate embeddings during event detection. Such embodiments are configurable in various ways. For instance, FIG. 14 shows a block diagram of a system 1400 for utilizing an embedding model, in accordance with another example embodiment. As shown in FIG. 14, system 1400 comprises embedding generator 112, event detector 122, and embedding model 128, as described with respect to FIG. 1, as well as attack embeddings 1402. Attack embeddings 1402 correspond to previously executed operations associated with cyber-attacks. In some embodiments, attack embeddings 1402 correspond to confirmed cyber-attacks. In other (e.g., additional or alternative) embodiments, attack embeddings 1402 correspond to operations a developer or system has identified as corresponding to potential cyber-attacks. In accordance with an embodiment, attack embeddings 1402 are generated by embedding model 128. In accordance with another embodiment, some or all of attack embeddings 1402 are manually generated or generated by an embedding model other than embedding model 128.

To better understand the operation of system 1400, FIG. 14 is described with respect to FIG. 15. FIG. 15 shows a flowchart 1500 of a process for utilizing an embedding model, in accordance with another example embodiment. In accordance with an embodiment, system 1400 operates in accordance with one or more steps of flowchart 1500. Note that not all steps of flowchart 1500 need be performed in all embodiments. Further structural and operational embodiments will be apparent to persons skilled in the relevant art(s) based on the following descriptions of FIGS. 14 and 15.

Flowchart 1500 begins with step 1502. In step 1502, a generative AI model is utilized to generate operation embeddings based on the executing operation. For example, embedding generator 112 of FIG. 14 utilizes embedding model 128 to generate operation embeddings 1408. As shown in FIG. 14, embedding generator 112 receives logging information of logging signal 208 (e.g., from log generator 120 of FIG. 1 or from event detector 122). Embedding generator 112 generates a prompt 1404 to embedding model 128 comprising instructions to cause embedding model 128 to generate operation embeddings 1408. Embedding generator 112, in an embodiment, generates prompt 1404 in a similar manner as those described with respect to prompt 1108 of FIG. 11. As shown in FIG. 14, embedding generator 112 receives operation embeddings 1408 from embedding model 128. Operation embeddings 1408 are information dense representations of semantic meaning of the executing operation. As further shown in FIG. 14, embedding generator 112 provides operation embeddings 1408 to event detector 122 as embedding output 1410.

In step 1504, a semantic similarity between the operation embeddings and attack embeddings is determined to satisfy a triggering event criterion, the attack embeddings corresponding to a previously executed operation associated with a cyber-attack. For example, event detector 122 determines a semantic similarity between attack embeddings 1402 and operation embeddings 1410 satisfies a triggering event criterion (e.g., triggering event criterion 214 of FIG. 2). If the semantic similarity satisfies the criterion (e.g., the semantic similarity indicates the operation is semantically similar to an operation corresponding to a cyber-attack), event detector 122 generates detection signal 210.

Thus, an example of utilizing an embedding model in an "online" implementation of embedding generation in event detection is described with respect to FIGS. 14 and 15. By utilizing embedding model 128 to generate embeddings 1408 that semantically describe a received operation, embodiments of system 1400 are able to closely compare embeddings of the received operation to embeddings of previous/potential cyber-attacks (e.g., attack embeddings 1402). In this context, the accuracy in semantically matching an operation to a potential cyber-attack is increased, thereby improving the overall security of a network system implementing an embedding model in a similar manner to that described with respect to system 1400.

### V. Further Example Embodiments

### A. Watermarking Embodiments

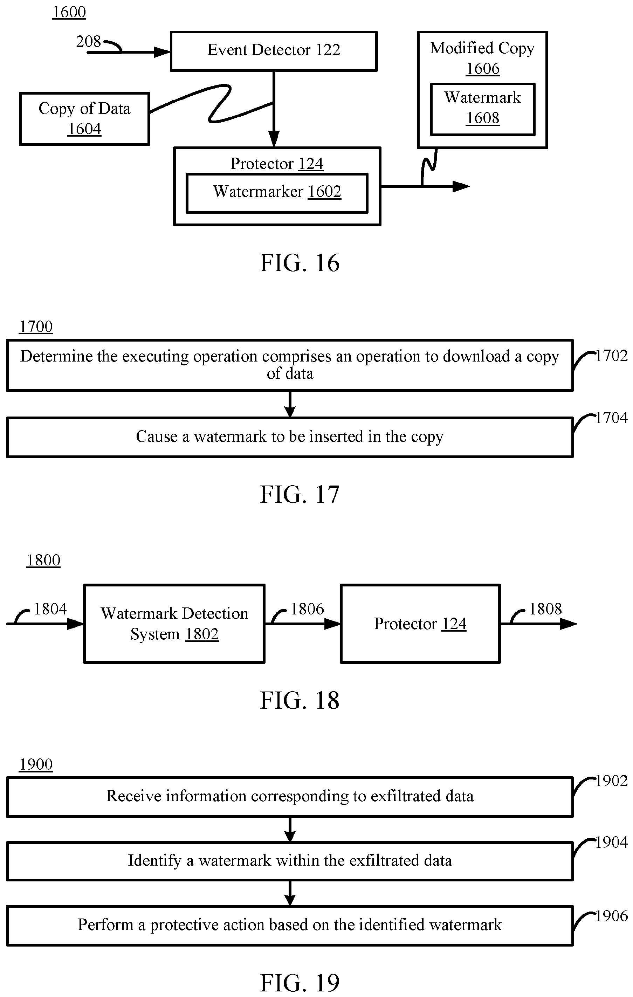

Embodiments of the present disclosure provide several techniques for detecting potential cyber-attacks in logging systems. As described herein, some embodiments perform a preemptive action in response to detecting a potential cyber-attack and/or an operation that could lead to a potential cyber-attack. One example of a preemptive action is watermarking data that is being downloaded (or is to be downloaded) during the potential cyber-attack. In this context, the watermark is detectable by a watermark detection system such that, should the data be exfiltrated or publicly leaked, the source of the leak can be traced to the detected potential cyber-attack. Embodiments of systems that watermark data are configurable in various ways. For example, FIG. 16 shows a block diagram of a system 1600 for watermarking data, in accordance with an example embodiment. As shown in FIG. 16, system 1600 comprises event detector 122 and protector 124, as described with respect to FIG. 1. As also shown in FIG. 16, protector 124 comprises a watermarker 1602, which is implemented as a subservice or subcomponent of protector 124. To better understand the operation of system 1600 comprising watermarker 1602, FIG. 16 is described with respect to FIG. 17. FIG. 17 shows a flowchart 1700 of a process for watermarking data, in accordance with an example embodiment. In accordance with an embodiment, system 1600 operates in accordance with one or more steps of flowchart 1700. Note that not all steps of flowchart 1700 need be performed in all embodiments. Further structural and operational embodiments will be apparent to persons skilled in the relevant art(s) based on the following descriptions of FIGS. 16 and 17.

Flowchart 1700 begins with step 1702, which is a further example of step 306 of flowchart 300 of FIG. 3. In step 1702, the executing operation is determined to comprise an operation to download a copy of data. For example, event detector 122 of FIG. 16 receives logging signal 208 and determines the executing operation comprises an operation to download a copy of data (also referred to as a "download operation" herein). In this context, event detector 122 indicates to protector 124 that the operation comprises the download operation. For instance, as shown in FIG. 16, event detector 122 transmits a copy of data 1604 to protector 124, the copy being the data the executing operation intends to download. In accordance with an embodiment, event detector 122 receives copy of data 1604 by intercepting the download operation of the executing operation. In an alternative embodiment, event detector 122 transmits an indication of the data the executing operation intends to download to protector 124, thereby causing protector 124 to obtain copy of data 1604 from database 108 (e.g., by intercepting the executing operation). In some embodiments, event detector 122 indicates to protector 124 any data download operation performed with respect to database 108. Altematively, event detector 122 indicates to protector 124 data download operations where the executing operation satisfies other triggering event criterion. In accordance with an embodiment, event detector 122 indicates to protector 124 download operations with respect to particular subsets of data (e.g., data that is marked as confidential, data that is marked as internal-use only, data related to a top secret project, data that is locked to a particular region, and/or other type of sensitive data).

Flow continues to step 1704, which is a further example of step 308 of flowchart 300 of FIG. 3. In step 1704, a watermark is caused to be inserted in the copy. For example, watermarker 1602 of protector 124 inserts a watermark 1608 into copy of data 1604, resulting in modified copy 1606. Examples of watermark 1608 include, but are not limited to, pixel data configured to be analyzed by a watermark detection system (e.g., as further described with respect to FIGS. 18 and 19) to determine a secret indicative that the data was exfiltrated, an identifier of a user account the executing operation was executed on behalf of, a timestamp of when the download operation occurred and/or was requested, a modification of existing data rows and/or metadata rows, an additional row that stores text and/or other information indicative of the watermark, and/or the like. In accordance with an embodiment, watermark 1608 is imperceptible to a user (e.g., invisible to the human eye) and/or the downloading application (e.g., encoded and/or encrypted in a manner that the downloading application (e.g., application 116) is unable to detect, access, and/or alter the watermark). In accordance with an embodiment, watermark 1608 is embedded in modified copy 1606 that is immutable (e.g., resistant to tamper from an external application, e.g., application 116). In accordance with an embodiment, watermark 1608 is embedded in modified copy 1606 in a manner that does not impact use of modified copy 1606 by application 116.

As shown in FIG. 16, watermarker 1602 is a sub-component of protector 124; however, embodiments described herein are not so limited. For instance, in accordance with an embodiment, watermarker 1602 is a separate component of logging system 106. Altematively, watermarker 1602 is implemented in lieu of a logging system. For instance, in accordance with an embodiment, a watermarker detects (e.g., in a similar manner as event detector 122) a download operation is occurring and watermarks data (e.g., in a similar manner as described with respect to 1704). In this context, watermarker 1602 watermarks (e.g., every) copy of data downloaded from a database (e.g., without the need of a logging system configured to detect cyber-attacks). In another alternative, the separate watermarker system works in tandem with logging system 106 to provide multiple types of cyber-attack mitigation and/or prevention.

Thus, example embodiments of watermarking data have been described with respect to FIGS. 16 and 17. By including a watermark (or other type of special marker) in downloaded data, embodiments of watermarker 1602 enable tracking of an original user account utilized to download data. Watermarks enable systems to detect the original downloading application and/or user account of exfiltrated data. For instance, a watermark detection system (or a watermark detection sub-system) in accordance with an embodiment is configured to detect watermarks inserted into exfiltrated data by watermarker 1602. Embodiments of systems comprising a watermark detection system are configurable in various ways. For example, FIG. 18 shows a block diagram of a system 1800 for identifying and remediating watermarked data, in accordance with an example embodiment. As shown in FIG. 18, system 1800 comprises protector 124, as described with respect to FIG. 1, as well as a watermark detection system 1802. In embodiments, watermark detection system 1802 is a sub-system of logging system 106. In an alternative embodiment, watermark detection system 1802 is a separate system from logging system 106 and configured to communicate with logging system 106 (or components thereof) over a network (e.g., network 134). To better understand the operation of systems comprising watermark detection system 1802, FIG. 18 is described with respect to FIG. 19. FIG. 19 shows a flowchart 1900 of a process for identifying and remediating watermarked data, in accordance with an example embodiment. In accordance with an embodiment, system 1800 operates in accordance with one or more steps of flowchart 1900. Note that not all steps of flowchart 1900 need be performed in all embodiments. Further structural and operational embodiments will be apparent to persons skilled in the relevant art(s) based on the following descriptions of FIGS. 18 and 19.

Flowchart 1900 begins with step 1902. In step 1902, information corresponding to exfiltrated data is received. For example, watermark detection signal 1802 receives exfiltration information 1804, exfiltration information 1804 corresponding to exfiltrated data. In embodiments, watermark detection system 1802 receives exfiltration information 1804 by crawling webpages for watermarked data. In an altemative embodiment, exfiltration information 1804 is transmitted to watermark detection system 1802 from a cyber-attack triage system (e.g., a system that is analyzing leaked information to determine the origin of the leak). In another alternative embodiment, watermark detection system 1802 receives exfiltration information 1804 from a portal that enables users to submit data to watermark detection system 1802 to determine if the data is leaked and/or where the leak originated from.

In step 1904, a watermark is identified within the exfiltrated data. For example, watermark detection system 1802 identifies a watermark in exfiltrated data of exfiltration information 1804. For instance, as a non-limiting example, suppose a leaking user ("Leaker L" herein) executed an operation against database 108 (e.g., utilizing application 116) to download data. In this example, system 1600 of FIG. 16 intercepted the operation to obtain copy of the data 1604 and insert watermark 1608. System 1600 provided modified copy 1606 to the application of **Leaker L.** Further suppose **Leaker L** published modified copy 1606 on a web page or otherwise leaked modified copy 1606 in a manner that caused modified copy 1606 to be published on a web page and/or provided to watermark detection system 1802 as exfiltration information 1804. In this context, watermark detection system 1802 detects watermark 1608 and provides a watermark detection signal 1806 to protector 124. Watermark detection signal 1806 comprises information watermark detection system 1802 derived from watermark 1608. For instance, suppose watermark 1608 indicated **Leaker L** was the user that the leaked modified copy 1606 was downloaded on behalf of **Leaker L** (e.g., by indicating a user ID of a user account of **Leaker L,** by indicating an application ID of application 116, by indicating a computing device of **Leaker L,** by indicating an IP address of **Leaker L,** and/or the like). In this context, watermark detection signal 1806 comprises such information identified by watermark detection system 1802.

In step 1906, a remedial action is performed based on the identified watermark. For example, protector 124 of FIG. 18 performs a remedial action 1808 based on the watermark identified in step 1906. For instance, as shown in FIG. 18, protector 124 performs remedial action 1808 responsive to (e.g. and based on) watermark detection signal 1806. In embodiments, remedial action 1808 mitigates further cyber-attacks by the identified user account and/or through usage of the identified user account. For instance, examples of remedial action 1808 include, but are not limited to, blocking the user account's access to sensitive data of database 108, resetting a password of the user account (e.g., in scenarios where the data exfiltration occurred as a result of the user account being compromised), flagging the user account as a potential bad actor to a managing user account (e.g., a user account of the user's manager, a user account of the user's employing organization, and/or the like), and/or performing any other type of action to mitigate further data exfiltration (or other cyber-attack activities) by the user account.

### B. Attack Classifier Embodiments

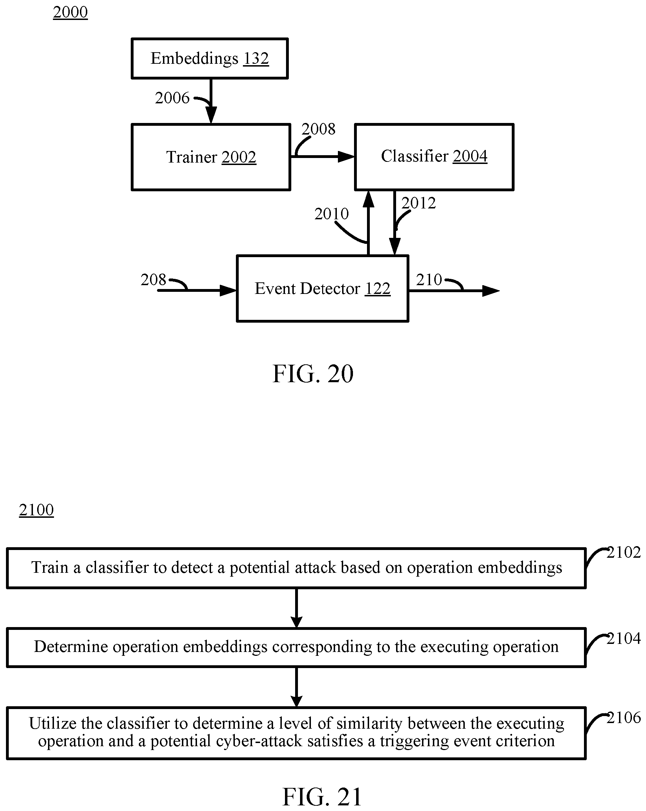

Some embodiments have been described herein with respect to detecting potential cyber-attacks based on a semantic similarity between operation embeddings corresponding to the executing operation and operation embeddings corresponding to a potential cyber-attack. In some embodiments, a classifier is trained over operation embeddings corresponding to potential-cyber-attacks to detect attacks based on embeddings corresponding to an executing query. Systems including classifiers can be configured in various ways, in embodiments. For example, FIG. 20 shows a block diagram of a system 2000 for training and utilizing a classifier to detect a potential attack, in accordance with an example embodiment. As shown in FIG. 20, system 2000 comprises event detector 122 and embeddings 132, as described with respect to FIG. 1, as well as a trainer 2002 and a classifier 2004. Trainer 2002 is configured to train classifier 2004 to detect potential attacks based on embeddings 132 and classifier 2004 is configured to, once trained, detect potential attacks based on input embeddings corresponding to one or more operations. In accordance with an embodiment, classifier 2004 is a machine learning (ML) model.

In order to better understand the operation of system 2000, FIG. 20 is described with respect to FIG. 21. FIG. 21 shows a flowchart 2100 of a process for training and utilizing a classifier to detect a potential attack, in accordance with an example embodiment. In accordance with an embodiment, system 2000 operates in accordance with one or more steps of flowchart 2100. Note that not all steps of flowchart 2100 need be performed in all embodiments. Further structural and operational embodiments will be apparent to persons skilled in the relevant art(s) based on the following descriptions of FIGS. 20 and 21.

Flowchart 2100 begins with step 2102. In step 2102, a classifier is trained to detect a potential attack based on operation embeddings. For example, trainer 2002 of FIG. 20 receives embeddings 2006 of embeddings 132. In examples, embeddings 2006 are operation embeddings corresponding to cyber-attacks. For instance, in accordance with an embodiment, embeddings 2006 of embeddings 132 that correspond to potential cyber-attacks are marked in a vector database as such. In this context, trainer 2002 retrieves embeddings 2006 from embeddings 132 based on the marking. Trainer 2002 trains classifier 2004 by providing training input 2008 to classifier 2004. In embodiments, trainer 2002 trains classifier 2004 through supervised, semi-supervised, or unsupervised learning. In accordance with an embodiment, trainer 2002 evaluates predictions made by classifier 2004 to determine whether or not classifier 2004 accurately predicted an embedding corresponded to a cyber-attack. In accordance with an embodiment, trainer 2002 provides embeddings of embeddings 132 that do not correspond to a potential cyber-attack to evaluate whether or not classifier 2004 outputs a false positive (i.e., an indication of a potential cyber-attack where there should have been no indication of a potential cyber-attack). In some embodiments, trainer 2002 updates classifier 2004 by retraining classifier 2004 on new embeddings corresponding to cyber-attacks. In some embodiments, trainer 2002 updates classifier 2004 to identify the type of potential cyber-attack. In some embodiments, trainer 2002 trains separate classifiers to identify respective types of potential cyber-attacks.

Flowchart 2100 continues to step 2104. In step 2106, operation embeddings corresponding to the executing operation are determined. For example, event detector 122 of FIG. 20 receives logging signal 208 and determines operation embeddings 2010 corresponding to the executing operation. In accordance with an embodiment, event detector 122 determines operation embeddings 2010 in a similar manner as described with respect to similar operation mapper 1102 of FIG. 11 and step 1304 of flowchart 1300 of FIG. 13.

In step 2106, the classifier is utilized to determine a level of similarity between the executing operation and a potential cyber-attack satisfies a triggering event criterion. For example, event detector 122 of FIG. 20 utilizes classifier 2004 to determine a level of similarity between the executing operation a potential cyber-attack satisfies a triggering event criterion. As shown in FIG. 20, event detector 122 provides operation embeddings 2010 to classifier 2004 to cause classifier 2004 to determine if the embeddings are indicative of a potential attack. As also shown in FIG. 20, classifier 2004 provides a classification result 2012 to event detector 122 indicating whether or not operation embeddings 2010 are indicative of a potential cyber-attack. In accordance with an embodiment, classifier 2004 determines whether the operation embeddings 2010 are indicative of a potential cyber-attack by measuring a semantic similarity between operation embeddings 2010 and embeddings corresponding to potential cyber-attacks. If the semantic similarity fails to satisfy a triggering event criterion, classification result 2012 indicates operation embeddings 2010 fail to indicate a potential cyber-attack and no triggering event is detected based thereon. If the semantic similarity does satisfy the triggering event criterion, classification result 2012 indicates operation embeddings 2010 are indicative of a potential cyber-attack and event detector 122 generates detection signal 210 indicating a triggering event is detected. In some embodiments, classification result 2012 indicates the type of potential cyber-attack that operation embeddings 2010 are indicative of. In some embodiments, classification result 2012 indicate a likelihood that operation embeddings 2010 are indicative of the potential cyber-attack. In this context, event detector 122 compares the likelihood to a threshold to determine if the triggering event criterion is satisfied.

Thus, an example of training and utilizing a classifier to detect potential cyber-attacks has been described. By training and utilizing a classifier in this manner, such embodiments are able to adapt potential cyber-attack detection as attack vectors of cyber-attacks change, and detect cyber-attacks that use similar (but not necessarily the same) attack vectors as previous cyber-attacks.

### C. Other Operation Analysis Embodiments

Embodiments have been described herein with respect to detecting potential cyber-attacks based on a log generated during execution of an operation against a database. In accordance with an alternative embodiment, a logging system detects a potential cyber-attack based on a log generated during execution of other types of operations. For example, in accordance with an embodiment, a logging system such as logging system 106 of FIG. 1 is configured to generate a log of a user account session with respect to an application (e.g., application 116). In this context, the logging system receives operation information for an operation executed with respect to the application (e.g., utilizing the application to access data, utilizing the application to perform an action with respect to a computing device, adjusting a permission of a user account, adjusting a setting of the application, and/or the like). The logging system, during generation of the log, detects, based on the executing operation, a triggering event corresponding to a potential cyber-attack and performs (or causes performance of) a protective action. Depending on the implementation, the logging system performs steps similar to those described elsewhere herein with respect to analyzing and operating based on analysis of operations executing with respect to a database. By analyzing operations performed with respect to an application, such implementations of a logging system are able to detect cyber-attacks in scenarios other than database-targeted cyber-attacks.

### VI. Example Computer System Implementation

Embodiments of cyber-attack detection in logging systems described herein are implemented in hardware, or hardware combined with one or both of software and/or firmware. For example, logging system 106, embedding generator 112, application 116, operation execution engine 118, log generator 120, event detector 122, protector 124, embedding model 128, engine monitor 502, generator 504, similar operation mapper 1102, embedding similarity identifier 1104, watermarker 1602, watermark detection system 1802, trainer 2002, classifier 2004 and/or the components described therein, and/or the steps of flowcharts 300, 400, 600, 700, 800, 900, 1000, 1200, 1300, 1500, 1700, 1900 and/or 2100, are each implemented as computer program code/instructions configured to be executed in one or more processors and stored in a computer readable storage medium. Altematively, computing device 102, engine server 104, logging system 106, database 108 (e.g., nodes of database 108), data store 110, embedding generator 112, embeddings server 114, system 200, system 500, system 1100, system 1400, system 1600, system 1800, system 2000, and/or the components described therein, and/or the steps of flowcharts 300, 400, 600, 700, 800, 900, 1000, 1200, 1300, 1500, 1700, 1900, and/or 2100, are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

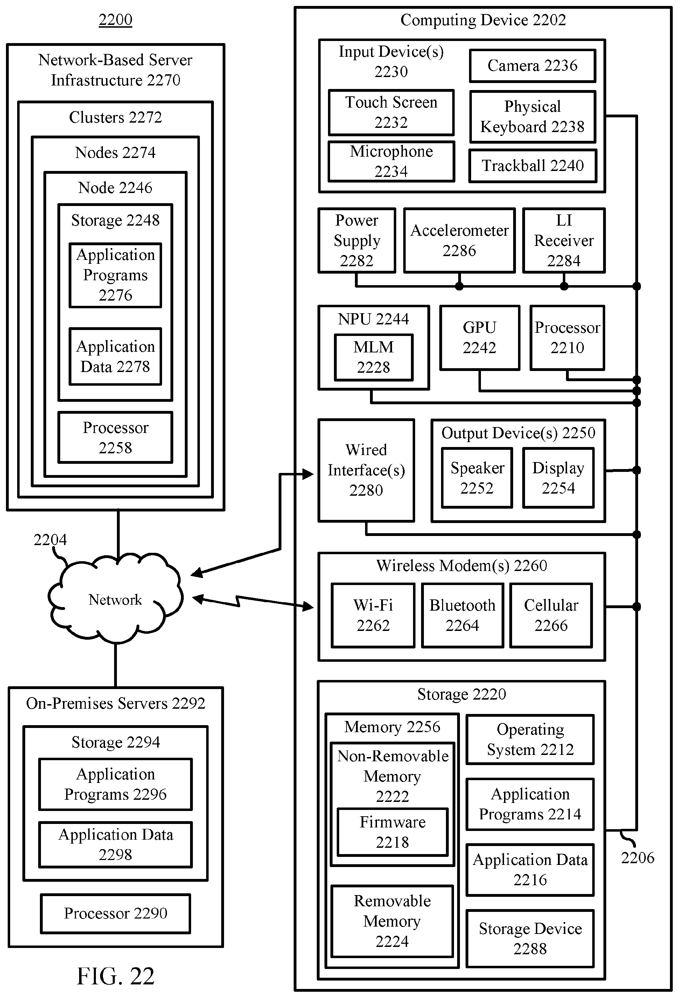

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 22. FIG. 22 shows a block diagram of an exemplary computing environment 2200 that includes a computing device 2202. Computing device 2202 is an example of computing device 102, engine server 104, logging system 106, embedding generator 112, embeddings server 114, and/or watermark detection system 1802, which each include one or more of the components of computing device 2202. In some embodiments, computing device 2202 is communicatively coupled with devices (not shown in FIG. 22) external to computing environment 2200 via network 2204. Network 2204 is an example of network 134. Network 2204 comprises one or more networks such as local area networks (LANs), wide area networks (WANs), enterprise networks, the Internet, etc. In examples, network 2204 includes one or more wired and/or wireless portions. In some examples, network 2204 additionally or alternatively includes a cellular network for cellular communications. Computing device 2202 is described in detail as follows.

Computing device 2202 can be any of a variety of types of computing devices. Examples of computing device 2202 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 2202 is a stationary computing device such as a desktop computer, a personal computer (PC), a stationary server device, a minicomputer, a mainframe, a supercomputer, etc.

As shown in FIG. 22, computing device 2202 includes a variety of hardware and software components, including a processor 2210, a storage 2220, a graphics processing unit (GPU) 2242, a neural processing unit (NPU) 2244, one or more input devices 2230, one or more output devices 2250, one or more wireless modems 2260, one or more wired interfaces 2280, a power supply 2282, a location information (LI) receiver 2284, and an accelerometer 2286. Storage 2220 includes memory 2256, which includes non-removable memory 2222 and removable memory 2224, and a storage device 2288. Storage 2220 also stores an operating system 2212, application programs 2214, and application data 2216. Wireless modem(s) 2260 include a Wi-Fi modem 2262, a Bluetooth modem 2264, and a cellular modem 2266. Output device(s) 2250 includes a speaker 2252 and a display 2254. Input device(s) 2230 includes a touch screen 2232, a microphone 2234, a camera 2236, a physical keyboard 2238, and a trackball 2240. Not all components of computing device 2202 shown in FIG. 22 are present in all embodiments, additional components not shown may be present, and in a particular embodiment any combination of the components are present. In examples, components of computing device 2202 are mounted to a circuit card (e.g., a motherboard) of computing device 2202, integrated in a housing of computing device 2202, or otherwise included in computing device 2202. The components of computing device 2202 are described as follows.

In embodiments, a single processor 2210 (e.g., central processing unit (CPU), microcontroller, a microprocessor, signal processor, ASIC (application specific integrated circuit), and/or other physical hardware processor circuit) or multiple processors 2210 are present in computing device 2202 for performing such tasks as program execution, signal coding, data processing, input/output processing, power control, and/or other functions. In examples, processor 2210 is a single-core or multi-core processor, and each processor core is single-threaded or multithreaded (to provide multiple threads of execution concurrently). Processor 2210 is configured to execute program code stored in a computer readable medium, such as program code of operating system 2212 and application programs 2214 stored in storage 2220. The program code is structured to cause processor 2210 to perform operations, including the processes/methods disclosed herein. Operating system 2212 controls the allocation and usage of the components of computing device 2202 and provides support for one or more application programs 2214 (also referred to as "applications" or "apps"). In examples, application programs 2214 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 2210 includes one or more general processors (e.g., CPUs) configured with or coupled to one or more hardware accelerators, such as one or more NPUs 2244 and/or one or more GPUs 2242.

Any component in computing device 2202 can communicate with any other component according to function, although not all connections are shown for ease of illustration. For instance, as shown in FIG. 22, bus 2206 is a multiple signal line communication medium (e.g., conductive traces in silicon, metal traces along a motherboard, wires, etc.) present to communicatively couple processor 2210 to various other components of computing device 2202, although in other embodiments, an alternative bus, further buses, and/or one or more individual signal lines is/are present to communicatively couple components. Bus 2206 represents one or more of any of several types of bus structures, including a memory bus or memory controller, a peripheral bus, an accelerated graphics port, and a processor or local bus using any of a variety of bus architectures.

Storage 2220 is physical storage that includes one or both of memory 2256 and storage device 2288, which store operating system 2212, application programs 2214, and application data 2216 according to any distribution. Non-removable memory 2222 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 2222 includes main memory and is separate from or fabricated in a same integrated circuit as processor 2210. As shown in FIG. 22, non-removable memory 2222 stores firmware 2218 that is present to provide low-level control of hardware. Examples of firmware 2218 include BIOS (Basic Input/Output System, such as on personal computers) and boot firmware (e.g., on smart phones). In examples, removable memory 2224 is inserted into a receptacle of or is otherwise coupled to computing device 2202 and can be removed by a user from computing device 2202. Removable memory 2224 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 2288 are present that are internal and/or external to a housing of computing device 2202 and are or are not removable. Examples of storage device 2288 include a hard disk drive, a SSD, a thumb drive (e.g., a USB (Universal Serial Bus) flash drive), or other physical storage device.

One or more programs are stored in storage 2220. Such programs include operating system 2212, one or more application programs 2214, and other program modules and program data. Examples of such application programs include computer program logic (e.g., computer program code/instructions) for implementing logging system 106, embedding generator 112, application 116, operation execution engine 118, log generator 120, event detector 122, protector 124, embedding model 128, engine monitor 502, generator 504, similar operation mapper 1102, embedding similarity identifier 1104, watermarker 1602, watermark detection system 1802, trainer 2002, classifier 2004 and/or the components described therein, and/or the steps of flowcharts 300, 400, 600, 700, 800, 900, 1000, 1200, 1300, 1500, 1700, 1900, and/or 2100.

Storage 2220 also stores data used and/or generated by operating system 2212 and application programs 2214 as application data 2216. Examples of application data 2216 include web pages, text, images, tables, sound files, video data, and other data. In examples, application data 2216 is sent to and/or received from one or more network servers or other devices via one or more wired or wireless networks. Storage 2220 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 2202 through one or more input devices 2230 and receives information from computing device 2202 through one or more output devices 2250. Input device(s) 2230 includes one or more of touch screen 2232, microphone 2234, camera 2236, physical keyboard 2238 and/or trackball 2240 and output device(s) 2250 includes one or more of speaker 2252 and display 2254. Each of input device(s) 2230 and output device(s) 2250 are integral to computing device 2202 (e.g., built into a housing of computing device 2202) or are external to computing device 2202 (e.g., communicatively coupled wired or wirelessly to computing device 2202 via wired interface(s) 2280 and/or wireless modem(s) 2260). Further input devices 2230 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 2254 displays information, as well as operating as touch screen 2232 by receiving user commands and/or other information (e.g., by touch, finger gestures, virtual keyboard, etc.) as a user interface. Any number of each type of input device(s) 2230 and output device(s) 2250 are present, including multiple microphones 2234, multiple cameras 2236, multiple speakers 2252, and/or multiple displays 2254.

In embodiments where GPU 2242 is present, GPU 2242 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 2242 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 2244 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 2228. In an example, NPU 2244 is configured for a data-driven parallel computing and is highly efficient at processing massive multimedia data such as videos and images and processing data for neural networks. NPU 2244 is configured for efficient handling of AI-related tasks, such as speech recognition, background blurring in video calls, photo or video editing processes like object detection, etc.

In embodiments disclosed herein that implement ML models, NPU 2244 can be utilized to execute such ML models, of which MLM 2228 is an example. In accordance with an embodiment, MLM 2228 is an example of embedding model 128 and/or classifier 2004. For instance, where applicable, MLM 2228 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 2244 is used to train MLM 2228. To train MLM 2228, training data is that includes input features (attributes) and their corresponding output labels/target values (e.g., for supervised learning) is collected. A training algorithm is a computational procedure that is used so that MLM 2228 learns from the training data. Parameters/weights are internal settings of MLM 2228 that are adjusted during training by the training algorithm to reduce a difference between predictions by MLM 2228 and actual outcomes (e.g., output labels). In some examples, MLM 2228 is set with initial values for the parameters/weights. A loss function measures a dissimilarity between predictions by MLM 2228 and the target values, and the parameters/weights of MLM 2228 are adjusted to minimize the loss function. The parameters/weights are iteratively adjusted by an optimization technique, such as gradient descent. In this manner, MLM 2228 is generated through training by NPU 2244 to be used to generate inferences based on received input feature sets for particular applications. MLM 2228 is generated as a computer program or other type of algorithm configured to generate an output (e.g., a classification, a prediction/inference) based on received input features, and is stored in the form of a file or other data structure.

In examples, such training of MLM 2228 by NPU 2244 is supervised or unsupervised. According to supervised learning, input objects (e.g., a vector of predictor variables) and a desired output value (e.g., a human-labeled supervisory signal) train MLM 2228. The training data is processed, building a function that maps new data on expected output values. Example algorithms usable by NPU 2244 to perform supervised training of MLM 2228 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 2228 is an LLM, MLM 2228 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 2228 is trained to learn patterns from unlabeled data. For instance, in embodiments where MLM 2228 implements unsupervised learning techniques, MLM 2228 identifies one or more classifications or clusters to which an input belongs. During a training phase of MLM 2228 according to unsupervised learning, MLM 2228 tries to mimic the provided training data and uses the error in its mimicked output to correct itself (i.e., correct weights and biases). In further examples, NPU 2244 perform unsupervised training of MLM 2228 according to one or more altemative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 2244 need not necessarily be present in all ML model embodiments. In embodiments where ML models are present, any one or more of processor 2210, GPU 2242, and/or NPU 2244 can be present to train and/or execute MLM 2228.

One or more wireless modems 2260 can be coupled to antenna(s) (not shown) of computing device 2202 and can support two-way communications between processor 2210 and devices external to computing device 2202 through network 2204, as would be understood to persons skilled in the relevant art(s). Wireless modem 2260 is shown generically and can include a cellular modem 2266 for communicating with one or more cellular networks, such as a GSM network for data and voice communications within a single cellular network, between cellular networks, or between the mobile device and a public switched telephone network (PSTN). In examples, wireless modem 2260 also or alternatively includes other radio-based modem types, such as a Bluetooth modem 2264 (also referred to as a "Bluetooth device") and/or Wi-Fi modem 2262 (also referred to as an "wireless adaptor"). Wi-Fi modem 2262 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 2264 is configured to communicate with another Bluetooth-capable device according to the Bluetooth short-range wireless technology standard(s) such as IEEE 802.15.1 and/or managed by the Bluetooth Special Interest Group (SIG).

Computing device 2202 can further include power supply 2282, LI receiver 2284, accelerometer 2286, and/or one or more wired interfaces 2280. Example wired interfaces 2280 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 2280 of computing device 2202 provide for wired connections between computing device 2202 and network 2204, or between computing device 2202 and one or more devices/peripherals when such devices/peripherals are external to computing device 2202 (e.g., a pointing device, display 2254, speaker 2252, camera 2236, physical keyboard 2238, etc.). Power supply 2282 is configured to supply power to each of the components of computing device 2202 and receives power from a battery internal to computing device 2202, and/or from a power cord plugged into a power port of computing device 2202 (e.g., a USB port, an A/C power port). LI receiver 2284 is useable for location determination of computing device 2202 and in examples includes a satellite navigation receiver such as a Global Positioning System (GPS) receiver and/or includes other type of location determiner configured to determine location of computing device 2202 based on received information (e.g., using cell tower triangulation, etc.). Accelerometer 2286, when present, is configured to determine an orientation of computing device 2202.

Note that the illustrated components of computing device 2202 are not required or all-inclusive, and fewer or greater numbers of components can be present as would be recognized by one skilled in the art. In examples, computing device 2202 includes one or more of a gyroscope, barometer, proximity sensor, ambient light sensor, digital compass, etc. In an example, processor 2210 and memory 2256 are co-located in a same semiconductor device package, such as being included together in an integrated circuit chip, FPGA, or system-on-chip (SOC), optionally along with further components of computing device 2202.

In embodiments, computing device 2202 is configured to implement any of the above-described features of flowcharts herein. Computer program logic for performing any of the operations, steps, and/or functions described herein is stored in storage 2220 and executed by processor 2210.

In some embodiments, server infrastructure 2270 is present in computing environment 2200 and is communicatively coupled with computing device 2202 via network 2204. Server infrastructure 2270, when present, is a network-accessible server set (e.g., a cloud-based environment or platform). As shown in FIG. 22, server infrastructure 2270 includes clusters 2272. Each of clusters 2272 comprises a group of one or more compute nodes and/or a group of one or more storage nodes. For example, as shown in FIG. 22, cluster 2272 includes nodes 2274. Each of nodes 2274 are accessible via network 2204 (e.g., in a "cloud-based" embodiment) to build, deploy, and manage applications and services. In examples, any of nodes 2274 is a storage node that comprises a plurality of physical storage disks, SSDs, and/or other physical storage devices that are accessible via network 2204 and are configured to store data associated with the applications and services managed by nodes 2274.

Each of nodes 2274, as a compute node, comprises one or more server computers, server systems, and/or computing devices. For instance, a node 2274 in accordance with an embodiment includes one or more of the components of computing device 2202 disclosed herein. Each of nodes 2274 is configured to execute one or more software applications (or "applications") and/or services and/or manage hardware resources (e.g., processors, memory, etc.), which are utilized by users (e.g., customers) of the network-accessible server set. In examples, as shown in FIG. 22, nodes 2274 includes a node 2246 that includes storage 2248 and/or one or more of a processor 2258 (e.g., similar to processor 2210, GPU 2242, and/or NPU 2244 of computing device 2202). Storage 2248 stores application programs 2276 and application data 2278. Processor(s) 2258 operate application programs 2276 which access and/or generate related application data 2278. In an implementation, nodes such as node 2246 of nodes 2274 operate or comprise one or more virtual machines, with each virtual machine emulating a system architecture (e.g., an operating system), in an isolated manner, upon which applications such as application programs 2276 are executed.

In embodiments, one or more of clusters 2272 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 2272 are included in a datacenter in a distributed collection of datacenters. In embodiments, exemplary computing environment 2200 comprises part of a cloud-based platform.

In an embodiment, computing device 2202 accesses application programs 2276 for execution in any manner, such as by a client application and/or a browser at computing device 2202.

In an example, for purposes of network (e.g., cloud) backup and data security, computing device 2202 additionally and/or alternatively synchronizes copies of application programs 2214 and/or application data 2216 to be stored at network-based server infrastructure 2270 as application programs 2276 and/or application data 2278. In examples, operating system 2212 and/or application programs 2214 include a file hosting service client configured to synchronize applications and/or data stored in storage 2220 at network-based server infrastructure 2270.

In some embodiments, on-premises servers 2292 are present in computing environment 2200 and are communicatively coupled with computing device 2202 via network 2204. On-premises servers 2292, when present, are hosted within an organization's infrastructure and, in many cases, physically onsite of a facility of that organization. On-premises servers 2292 are controlled, administered, and maintained by IT (Information Technology) personnel of the organization or an IT partner to the organization. Application data 2298 can be shared by on-premises servers 2292 between computing devices of the organization, including computing device 2202 (when part of an organization) through a local network of the organization, and/or through further networks accessible to the organization (including the Internet). Furthermore, in examples, on-premises servers 2292 serve applications such as application programs 2296 to the computing devices of the organization, including computing device 2202. Accordingly, in examples, on-premises servers 2292 include storage 2294 (which includes one or more physical storage devices such as storage disks and/or SSDs) for storage of application programs 2296 and application data 2298 and include a processor 2290 (e.g., similar to processor 2210, GPU 2242, and/or NPU 2244 of computing device 2202) for execution of application programs 2296. In some embodiments, multiple processors 2290 are present for execution of application programs 2296 and/or for other purposes. In further examples, computing device 2202 is configured to synchronize copies of application programs 2214 and/or application data 2216 for backup storage at on-premises servers 2292 as application programs 2296 and/or application data 2298.

Embodiments described herein may be implemented in one or more of computing device 2202, network-based server infrastructure 2270, and on-premises servers 2292. For example, in some embodiments, computing device 2202 is used to implement systems, clients, or devices, or components/subcomponents thereof, disclosed elsewhere herein. In other embodiments, a combination of computing device 2202, network-based server infrastructure 2270, and/or on-premises servers 2292 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 2220. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 2214) are stored in storage 2220. Such computer programs can also be received via wired interface(s) 2260 and/or wireless modem(s) 2260 over network 2204. Such computer programs, when executed or loaded by an application, enable computing device 2202 to implement features of embodiments discussed herein. Accordingly, such computer programs represent controllers of the computing device 2202.

Embodiments are also directed to computer program products comprising computer code or instructions stored on any computer-readable medium or computer-readable storage medium. Such computer program products include the physical storage of storage 2220 as well as further physical storage types.

### VII. Additional Example Embodiments

A system is described herein. The system comprising a processor and memory. The memory stores program code executable by the processor circuit. The program code comprising a logging system that: receives operation information for an executing operation; generates a log of the executing operation based on the operation information; detects (during said generating the log and based on the executing operation) a triggering event corresponding to a potential cyber-attack; and performs a protective action to mitigate the potential cyber-attack.

In a further example of the foregoing system, the potential cyber-attack comprises a potential ransomware cyber-attack, a potential data exfiltration cyber-attack, or a potential man-in-the-middle cyber-attack.

In a further example of the foregoing system, wherein the executing operation comprises a plurality of sub-operations and, to detect the triggering event, the logging system determines a similarity between a pattern of the sub-operations and a pattern of the potential cyber-attack satisfies a triggering event criterion.

In a further example of the foregoing system, further comprising an embedding generator that: receives a set of potential operations for execution against a database; utilizes a generative artificial intelligence (AI) model to generate operation embeddings for the set of potential operations; and stores the operation embeddings in a vector database.

In a further example of the foregoing system, wherein the logging system detects the triggering event based on the executing operation and the operation embeddings.

In a further example of the foregoing system, wherein to detect the triggering event based on the executing operation and the operation embeddings, the logging system: receives first operation embeddings corresponding to the potential cyber-attack; determines a level of similarity between a potential operation for executing against a database and the executing operation satisfy a similarity threshold; determines second operation embeddings correspond to the executing operation based on a mapping of the second operation embeddings to the potential operation; and determines a semantic similarity between the first operation embeddings and the second operation embeddings satisfies a triggering event criterion.

In a further example of the foregoing system, the system further comprises an embedding generator that utilizes a generative AI model to generate operation embeddings based on the executing operation.

In a further example of the foregoing system, to detect the triggering event, the logging system determines a semantic similarity between the operation embeddings and attack embeddings satisfies a triggering event criterion. The attack embeddings correspond to a previously executed operation associated with a cyber-attack.

In a further example of the foregoing system, to detect the triggering event, the logging system: identifies data accessed by the executing operation; and determines a frequency of previous accesses to the data satisfies a triggering event criterion.

In a further example of the foregoing system, wherein to detect the triggering event, the logging system determines the executing operation comprises a data transfer operation.

In a further example of the foregoing system, wherein to detect the triggering event, the logging system determines an amount of time spent executing the executing operation satisfies a triggering event criterion.

In a further example of the foregoing system, wherein to receive operation information the logging system monitors activity of an operation engine configured to execute operations.

In a further example of the foregoing system, the executing operation comprises an operation to download a copy of data. To perform the first protective action, the logging system causes a watermark to be inserted in the copy.

In a further example of the foregoing system, the watermark comprises pixel data configured to be analyzed by a watermark detection system to determine a secret indicative that the data was exfiltrated, an identifier of a user account the executing operation was executed on behalf of, or watermarked data in a result of the executing operation.

In a further example of the foregoing system, the system comprises an operation engine that executes the executing operation.

In a further example of the foregoing system, to receive the operation information, the logging system monitors activity of the operation engine.

In a further example of the foregoing system, wherein the executing operation comprises a plurality of sub-operations. To generate the log, the logging system: determines (e.g., based on the operation information) a sub-operation subset of the plurality of sub-operations satisfies a risk logging criterion; and includes the determined sub-operation subset in the log without including a first sub-operation of the plurality of sub-operations that fails to satisfy the risk logging criterion.

In a further example of the foregoing system, wherein the triggering event is detected based on the determined sub-operation subset.

In a further example of the foregoing system, the system comprises a trainer that trains a classifier to detect a potential attack based on operation embeddings.

In a further example of the foregoing system, the logging system: determines operation embeddings corresponding to the executing operation; and utilize the classifier to determine a level of similarity between the executing operation and a potential cyber-attack satisfying a triggering event criterion.

A method is described herein. The method comprising: receiving operation information for an executing operation; generating a log of the executing operation based on the operation information; during said generating the log, detecting, based on the executing operation, a triggering event corresponding to a potential cyber-attack, and performing a protective action to mitigate the potential cyber-attack.

In a further example of the foregoing method, the potential cyber-attack comprises a potential ransomware cyber-attack, a potential data exfiltration cyber-attack, or a potential man-in-the-middle cyber-attack.

In a further example of the foregoing method, wherein the executing operation comprises a plurality of sub-operations and, said detecting the triggering event comprises: determining a similarity between a pattern of the sub-operations and a pattern of the potential cyber-attack satisfies a triggering event criterion.

In a further example of the foregoing method, further comprising: receiving a set of potential operations for execution against a database; utilizing a generative artificial intelligence (AI) model to generate operation embeddings for the set of potential operations; and storing the operation embeddings in a vector database.

In a further example of the foregoing method, wherein said detecting the triggering event is further based on the executing operation and the operation embeddings.

In a further example of the foregoing method, wherein said detecting the triggering event based on the executing operation and the operation embeddings comprises: receiving first operation embeddings corresponding to the potential cyber-attack; determining a level of similarity between a potential operation for executing against a database and the executing operation satisfy a similarity threshold; determining second operation embeddings correspond to the executing operation based on a mapping of the second operation embeddings to the potential operation; and determining a semantic similarity between the first operation embeddings and the second operation embeddings satisfies a triggering event criterion.

In a further example of the foregoing method, further comprising: utilizing a generative AI model to generate operation embeddings based on the executing operation.

In a further example of the foregoing method, wherein said detecting the triggering event comprises: determining a semantic similarity between the operation embeddings and attack embeddings satisfies a triggering event criterion. The attack embeddings correspond to a previously executed operation associated with a cyber-attack.

In a further example of the foregoing method, wherein said detecting the triggering event comprises: identifying data accessed by the executing operation; and determining a frequency of previous accesses to the data satisfies a triggering event criterion.

In a further example of the foregoing method, wherein said detecting the triggering event comprises: determining the executing operation comprises a data transfer operation.

In a further example of the foregoing method, wherein said detecting the triggering event comprises: determining an amount of time spent executing the executing operation satisfies a triggering event criterion.

In a further example of the foregoing method, wherein said receiving operation information comprises monitoring activity of an operation engine configured to execute operations.

In a further example of the foregoing method, wherein the executing operation comprises an operation to download a copy of data. Said performing the first protective action comprising: causing a watermark to be inserted in the copy.

In a further example of the foregoing method, the watermark comprises pixel data configured to be analyzed by a watermark detection system to determine a secret indicative that the data was exfiltrated, an identifier of a user account the executing operation was executed on behalf of, or watermarked data in a result of the executing operation.

In a further example of the foregoing method, comprising executing the executing operation.

In a further example of the foregoing method, wherein the executing operation comprises a plurality of sub-operations. Said generating the log comprises: determining (e.g., based on the operation information) a sub-operation subset of the plurality of sub-operations satisfies a risk logging criterion; and including the determined sub-operation subset in the log without including a first sub-operation of the plurality of sub-operations that fails to satisfy the risk logging criterion.

In a further example of the foregoing method, wherein said detecting the triggering event is based on the determined sub-operation subset.

In a further example of the foregoing method, the method further comprises: training a classifier to detect a potential attack based on operation embeddings.

In a further example of the foregoing method, the method further comprises: determining operation embeddings corresponding to the executing operation; and utilizing the classifier to determine a level of similarity between the executing operation and a potential cyber-attack satisfies a triggering event criterion.

A computer readable storage medium is described herein. The computer readable storage medium comprising programming instructions encoded thereon. The programming instructions structured to cause a processor to perform any of the foregoing methods.

### VIII. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Numerous example embodiments have been described above. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Furthermore, example embodiments have been described above with respect to one or more running examples. Such running examples describe one or more particular implementations of the example embodiments; however, embodiments described herein are not limited to these particular implementations.

Moreover, according to the described embodiments and techniques, any components of systems, applications, computing devices, operation execution engines, logging systems, embedding generators, embedding models, databases, watermark detection systems, trainers, classifiers, and their functions may be caused to be activated for operation/performance thereof based on other operations, functions, actions, and/or the like, including initialization, completion, and/or performance of the operations, functions, actions, and/or the like.

Still further, several example embodiments have been described herein with respect to generating logs based on operation information and detecting triggering events with respect to operation information. However, it is also contemplated herein that some embodiments generate logs and detect triggering events based on user account sessions or periods of time a user account or application is accessing data. Further still, example embodiments have been described with respect to detecting triggering events based on an executing operation; however, some embodiments detect triggering events based on one or more sub-operations of an executing operation. Moreover, some embodiments detect triggering events with respect to an operation that is queued to be executed but has not been executed (or is otherwise not in the process of being executed), in this context, such embodiments are able to perform protective actions before the potential cyber-attack-related operation is executed, thereby reducing exposure of sensitive data or risk to the user account.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (computer program code configured to be executed in one or more processors or processing devices) and/or firmware.

While various embodiments have been described above, it should be understood that they have been presented by way of example only, and not limitation. It will be apparent to persons skilled in the relevant art that various changes in form and detail can be made therein without departing from the spirit and scope of the embodiments. Thus, the breadth and scope of the embodiments should not be limited by any of the above-described example embodiments, but should be defined only in accordance with the following claims and their equivalents.

## Claims

1. A system comprising:
a processor; and
a memory that stores program code executable by the processor circuit, the program code comprising:
a logging system that:
receives operation information for an executing operation comprising a plurality of sub-operations,
determines, based on the operation information, a sub-operation subset of the plurality of sub-operations satisfies a risk logging criterion,
generates a log of the determined sub-operation subset without including a first sub-operation of the plurality of sub-operations that fails to satisfy the risk logging criterion,
during generation of the log, detects, based on the determined sub-operation subset, a triggering event corresponding to a potential data exfiltration cyber-attack, and
performs a first protective action to mitigate the potential data exfiltration cyber-attack.

2. The system of claim 1, wherein to detect the triggering event, the logging system:
determines a level of similarity between a pattern of the determined sub-operation subset and a pattern of the potential data exfiltration cyber-attack satisfies a triggering event criterion.

3. The system of claim 1 or 2, further comprising:
an embedding generator that:
receives a set of potential operations for execution against a database,
utilizes a generative artificial intelligence (AI) model to generate operation embeddings for the set of potential operations, and
stores the operation embeddings in a vector database; and
wherein the logging system detects the triggering event based on the determined sub-operation subset and the operation embeddings.

4. The system of claim 3, to detect the triggering event based on the sub-operation subset and the operation embeddings, the logging system:
receives a first subset of the operation embeddings corresponding to the potential cyber-attack;
determines a second subset of the operation embeddings corresponding to the determined sub-operation subset based on a mapping of the second subset to a potential operation of the set of potential operations, the potential operation having a level of similarity to the determined sub-operation subset that satisfies a similarity criterion; and
determines a semantic similarity between the first subset of the operation embeddings and the second subset of the operation embeddings satisfies a triggering event criterion.

5. The system of one of claims 1 to 4, further comprising:
an embedding generator that utilizes a generative AI model to generate operation embeddings based on the determined sub-operation subset; and
wherein to detect the triggering event, the logging system determines a semantic similarity between the operation embeddings and attack embeddings satisfies a triggering event criterion, the attack embeddings corresponding to a previously executed operation associated with a cyber-attack.

6. The system of one of claims 1 to 5, at least one of:
wherein to detect the triggering event, the logging system:
identifies data accessed by the determined sub-operation subset; and
determines a frequency of previous accesses to the data satisfies a triggering event criterion; and
wherein to detect the triggering event, the logging system:
determines the determined sub-operation subset comprises a data transfer operation; and
determines an amount of time spent executing the executing operation satisfies a triggering event criterion.

7. The system of one of claims 1 to 6, wherein the determined sub-operation subset comprises an operation to download a copy of data and, to perform the first protective action, the logging system:
causes a watermark to be inserted in the copy.

8. The system of claim 7, at least one of:
wherein the watermark comprises:
pixel data configured to be analyzed by a watermark detection system to determine a secret indicative that the data was exfiltrated;
an identifier of a user account the executing operation was executed on behalf of; or
watermarked data in a result of the executing operation; and
wherein the logging system further:
receives a remediation request indicating exfiltrated data comprises the watermark; and
responsive to receiving the remediation request, performs a second protective action based on the watermark.

9. The system of one of claims 1 to 8, wherein the system comprises:
an operation engine that executes the executing operation; and
to receive the operation information, the logging system monitors activity of the operation engine.

10. A method for mitigating a potential ransomware cyber-attack, the method comprising:
receiving operation information for an executing operation;
generating a log of the executing operation based on the operation information;
during said generating the log, detecting, based on the executing operation, a triggering event corresponding to a potential ransomware cyber-attack, and
performing a protective action to mitigate the potential ransomware cyber-attack.

11. The method of claim 10, wherein the executing operation comprises a plurality of sub-operations and, said generating the log comprises:
determining a sub-operation subset of the plurality of sub-operations satisfy a risk logging criterion; and
including the determined sub-operation subset in the log without including a first sub-operation of the plurality of sub-operations that fails to satisfy the risk logging criterion.

12. The method of claim 10 or 11, wherein the executing operation comprises a plurality of sub-operations and, said detecting the triggering event comprises:
determining a similarity between a pattern of the sub-operations and a pattern of the potential ransomware cyber-attack satisfies a triggering event criterion.

13. The method of one of claims 10 to 12, at least one of:
wherein said detecting the triggering event comprises:
receiving first operation embeddings corresponding to the potential ransomware cyber-attack;
determining a level of similarity between a potential operation for executing against a database and the executing operation satisfy a similarity threshold;
determining second operation embeddings correspond to the executing operation based on a mapping of the second operation embeddings to the potential operation; and
determining a semantic similarity between the first operation embeddings and the second operation embeddings satisfies a triggering event criterion;
wherein said detecting the triggering event comprises:
identifying data accessed by the executing operation; and
determining a frequency of previous accesses to the data satisfies a triggering event criterion; and
wherein said receiving operation information comprises:
monitoring activity of an operation engine configured to execute operations.

14. A computer readable storage medium having program instructions recorded thereon, the program instructions structured to cause a processor to perform a method comprising:
receiving operation information for an executing operation comprising a plurality of sub-operations;
determining a sub-operation subset of the plurality of sub-operations satisfies a risk logging criterion;
generating a log of the determined sub-operation subset without including a first sub-operation of the plurality of sub-operations that fails to satisfy the risk logging criterion;
detecting, based on the determined sub-operation subset, a triggering event corresponding to a potential cyber-attack; and
performing a first protective action to mitigate the potential cyber-attack.

15. The computer readable storage medium of claim 14, at least one of:
wherein said detecting the triggering event comprises:
receiving first operation embeddings corresponding to the potential cyber-attack;
determining second operation embeddings correspond to the determined sub-operation subset based on a mapping of the second operation embeddings to a potential operation for executing against a database, the potential operation having a level of similarity to the determined sub-operation subset that satisfies a similarity criterion; and
determining a semantic similarity between the first operation embeddings and the second operation embeddings satisfies a triggering event criterion; and
wherein the determined sub-operation subset comprises an operation to download a copy of data and, the method further comprises:
causing a watermark to be inserted in the copy;
subsequent to the watermark being inserted in the copy, receiving a protective request indicating exfiltrated data comprises the watermark; and
performing a second protective action based on the watermark.
